(19) Europäisches Patentamt
European Patent Office
Office européen des brevets

(11) **EP 4 286 421 A1**

(12) **EUROPEAN PATENT APPLICATION**
published in accordance with Art. 153(4) EPC

(43) Date of publication:
**06.12.2023 Bulletin 2023/49**

(51) International Patent Classification (IPC):
**C08F 6/26** (2006.01)        **C08J 3/12** (2006.01)
**C08F 220/04** (2006.01)        **C08F 220/20** (2006.01)

(21) Application number: **22746068.0**

(52) Cooperative Patent Classification (CPC):
**C08F 6/26; C08F 220/04; C08F 220/20; C08J 3/12**

(22) Date of filing: **31.01.2022**

(86) International application number:
**PCT/JP2022/003551**

(87) International publication number:
**WO 2022/163849 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.01.2021   JP 2021013220**

(71) Applicant: **Nippon Shokubai Co., Ltd.
Osaka-shi, Osaka 541-0043 (JP)**

(72) Inventors:
• **WAKABAYASHI, Ryota
  Himeji-shi, Hyogo 671-1282 (JP)**
• **ADACHI, Yoshifumi
  Himeji-shi, Hyogo 671-1282 (JP)**

• **SATO, Mai
  Himeji-shi, Hyogo 671-1282 (JP)**
• **FUJINO, Shin-ichi
  Himeji-shi, Hyogo 671-1282 (JP)**
• **YORINO, Tsuyoshi
  Himeji-shi, Hyogo 671-1282 (JP)**
• **KATSUBE, Shin-ya
  Suita-shi, Osaka 564-0034 (JP)**
• **SHOBO, Yoshihiro
  Suita-shi, Osaka 564-0034 (JP)**
• **WATABE, Hiroyasu
  Suita-shi, Osaka 564-0034 (JP)**

(74) Representative: **Hoffmann Eitle
Patent- und Rechtsanwälte PartmbB
Arabellastraße 30
81925 München (DE)**

(54) **METHOD FOR PRODUCING WATER-ABSORBENT RESIN**

(57)    Provided is a production method for a water-absorbing resin in which an absorption capacity without pressure of the resulting water-absorbing resin is high and a water-absorbing resin can be efficiently obtained.

The production method for a water-absorbing resin including a polymerization step of polymerizing a monomer composition containing an internal crosslinking agent and a monomer to obtain a crosslinked hydrogel polymer, and a drying step of drying the crosslinked hydrogel polymer to obtain a dry polymer, in which the crosslinked hydrogel polymer to be subjected to the drying step contains 50 ppm or more of hydrogen peroxide with respect to the solid content mass of the crosslinked hydrogel polymer, and the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C.

FIG. 1

Processed by Luminess, 75001 PARIS (FR)

**Description**

**TECHNICAL FIELD**

The present invention relates to a method for producing a water-absorbing resin.

**BACKGROUND ART**

Water-absorbing resins (SAPs/Super Absorbent Polymers) are a water swellable and water insoluble polymer gelling agent, and are widely used in, for example, absorbent articles such as disposable diapers and sanitary napkins, agricultural or horticultural humectants, and industrial water sealants in various fields.

Many monomers and hydrophilic polymers as raw materials are used for the water-absorbing resins, and water-absorbing resins containing, as a main component, a polymer composed of an acid group-containing unsaturated monomer are industrially produced in the largest amount from the viewpoint of water absorption performance.

The water-absorbing resins have been required to have various functions (enhanced physical properties) as disposable diapers, which are one of the main applications, have advanced in performance. Specifically, the water-absorbing resins are required to have, in addition to basic physical properties such as absorption capacity without pressure and absorption capacity under load, a variety of physical properties such as gel strength, a water soluble component, a moisture content, water absorption speed, liquid permeability, particle size distribution, urine resistance, an antibacterial property, damage resistance, powder fluidity, a deodorant property, coloring resistance, low dustiness, and low monomer residue.

The water-absorbing resin is generally provided by polymerizing an acid group-containing unsaturated monomer, particularly polymerizing an aqueous solution of acrylic acid by aqueous solution polymerization or reversed-phase suspension polymerization to obtain a hydrogel polymer, and then drying the hydrogel polymer into a powder state. More specifically, a commercial production method of a water-absorbing resin typically includes a polymerization step, an optional gel-crushing (granulating) step performed after polymerization or simultaneously with polymerization, and a drying step of the granulated gel (Non-Patent Literature 1).

In industrial production, particularly continuous production, of a water-absorbing resin including these many steps, a trouble (for example, temporary stop) in one step leads to a decrease in physical properties and a decrease in productivity of a final product. Since the hydrogel polymer has high adhesiveness, the hydrogel polymer easily adheres to a production apparatus, which causes damage of a component or takes time to clean the apparatus at the time of maintenance. When gel-crushing is performed, an excessive load is likely to be applied to a crusher.

There is a tendency that the bulky pulp is reduced and the amount of the water-absorbing resin used and the role thereof are increased in order to reduce the thickness of a disposable diaper, and for this reason, physical properties, particularly, absorption capacity without pressure (CRC; Centrifuge Retention Capacity), of the water-absorbing resin is regarded as important.

The adhesion of the hydrogel polymer to a production facility and an increase in load on a crushing device in gel-crushing as described above not only significantly deteriorate productivity of the water-absorbing resin but also cause deterioration in physical properties of the water-absorbing resin. In general, since the crosslinking density is low in the water-absorbing resin having a high fluid retention capacity, adhesiveness of the hydrogel polymer is higher, and adhesion and load to a production apparatus are high. Therefore, such a problem is more remarkable in the water-absorbing resin having a high fluid retention capacity, and in aqueous solution polymerization (for example, belt polymerization) including a gel-crushing in a production process and polymerizing without a dispersion solvent, the hydrogel is directly contact with in a production facility (for example, belt polymerizer) of a water-absorbing resin, a hydrogel transport facility or storage device, a gel-crushing device, or the like, so that a problem of adhesion is likely to occur.

Therefore, in order to solve such problems, methods as described in Patent Literatures 1 to 9 have been proposed as a method for reducing adhesion of a hydrogel polymer to a production facility or the like and improving handleability of a hydrogel polymer to obtain a water-absorbing resin having a high fluid retention capacity.

Specifically, Patent Literature 1 proposes a method using a decomposable crosslinking agent in order to improve the handleability of a hydrogel to obtain a high fluid retention capacity. However, the decomposable crosslinking agent has problems in that the large amount of the decomposable crosslinking agent used is required because of low crosslinking efficiency and expensiveness, and further has a problem in that the decomposition product of the crosslinking agent remains in the water-absorbing resin. Patent Literatures 2 to 4 propose a method of adding a specific surfactant or polyethylene glycol to a monomer, a hydrogel, or an apparatus as a method of improving the handleability of a hydrogel polymer. However, these additives are expensive and have problems such as a decrease in surface tension of the water-absorbing resin. Patent Literature 5 proposes a method in which the contact surface between a hydrogel and an apparatus is covered with a resin film such as a fluororesin to suppress adhesion of a hydrogel polymer, but the adhesion preventing effect is insufficient, and moreover, there is also problem in that the resin film is expensive and poor in durability. Patent Literature 6 discloses a structure in which a belt substrate is entirely made of a resin and has a curved structure as a method for enhancing the releasability of a hydrogel polymer. However, in the case of using a resin substrate, it is necessary to use a thick substrate in order to obtain a sufficient strength, heat transfer is poor because of the resin material, and heat removal cannot be almost expected. When polymerization is performed without sufficient heat removal, only a polymer having a small molecular weight can be obtained, and thus sufficient performance may not be exhibited. Patent Literatures 7 and 8 disclose a polymerization method of a water-absorbing resin in which an inner surface of a polymerizer is electropolished and a wall surface is cooled during polymerization in order to prevent adhesion of a crosslinked hydrogel polymer, but even when such a special treatment is performed, the effect is still insufficient, and there is room for improvement. Patent Literature 9 discloses a polymerization method in which a hydrophobic organic solvent is added to a gas-liquid interface in order to prevent hydrogel polymer particles from adhering to an inner wall of a polymerization pot in reversed-phase suspension polymerization using a hydrophobic organic solvent.

Patent Literature 10 discloses a method for producing a water-absorbing resin in which hydroperoxide is added to a polymer subjected to polymerization (reversed-phase suspension polymerization) using a persulfate as a polymerization initiator, the water content is then adjusted to 10 to 40 wt%, and crosslinking is performed with a crosslinking agent having two or more functional groups capable of reacting with a carboxyl group. In Patent Literature 10, according to such a production method, a water-absorbing resin having excellent salt resistance and excellent water absorption speed is obtained. Patent Literature 15 discloses a method for producing a water-absorbing resin in which hydrogen peroxide is added before surface crosslinking of water-absorbing resin particles.

As compared with reversed-phase suspension polymerization using a large amount of hydrophobic dispersion organic solvent and dispersant described in Patent Literatures 8 to 11 and the like, and as compared with vapor phase-droplet polymerization described in Patent Literatures 12, 15, and the like, generally, in aqueous solution polymerization not using a dispersion medium such as an organic solvent or gas disclosed in Patent Literatures 1 to 7, 13, 14, and the like, the problem of adhesion of a crosslinked hydrogel polymer tends to be larger because the hydrogel polymer is in direct contact with the apparatus. Other than, Patent Literature 16 is mentioned as a related technique.

Citation List

Non-Patent Literature

Non-Patent Literature 1: Modern Superabsorbent Polymer Technology(1998)p69-117

Patent Literatures

Patent Literature 1: WO 2006/062609 A
Patent Literature 2: JP H11-188726 A
Patent Literature 3: JP S57-34101 A
Patent Literature 4: JP 2001-342258 A
Patent Literature 5: JP S60-055002 A
Patent Literature 6: JP S62-156102 A
Patent Literature 7: JP H02-049002 A
Patent Literature 8: JP H03-041104 A
Patent Literature 9: JP H04-372603 A
Patent Literature 10: JP S60-1205 A
Patent Literature 11: WO 2003/059962 A
Patent Literature 12: WO 2008/009611 A
Patent Literature 13: JP H11-181005 A
Patent Literature 14: JP H03-174414 A
Patent Literature 15: WO 2020/089013 A
Patent Literature 16: CN 101045789 A

**SUMMARY OF INVENTION**

Technical Problem

The present invention has been made based on the problem in that since the water-absorbing resin having a high fluid retention capacity has high adhesiveness of the hydrogel, adhesion and load to a production apparatus are high, and an object of the present invention is to provide a production method for a water-absorbing resin in which an absorption capacity without pressure of the resulting water-absorbing resin is high and a water-absorbing resin can be efficiently obtained, as compared to Patent Literatures 1 to 14, Non-Patent Literature 1, and the like. Solution to Problem

A production method for a water-absorbing resin of the present invention (first production method) is a production method for a water-absorbing resin, including a polymerization step of polymerizing an aqueous monomer composition containing an internal crosslinking agent and a monomer to obtain a crosslinked hydrogel polymer, and a drying step of drying the crosslinked hydrogel polymer to obtain a dry polymer, in which the crosslinked hydrogel polymer to be subjected to the drying step contains 50 ppm or more of hydrogen peroxide with respect to the solid content mass of the crosslinked hydrogel polymer, and the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C.

A production method for a water-absorbing resin of the present invention (second production method) is a production method for a water-absorbing resin, including a polymerization step of polymerizing a monomer composition containing an internal crosslinking agent and a monomer to obtain a crosslinked hydrogel polymer, and a drying step of drying the crosslinked hydrogel polymer to obtain a dry polymer, in which in the polymerization step, a monomer composition having a monomer concentration of 30 mass% or more and containing 50 to 10000 ppm of hydrogen peroxide with respect to the solid content mass of the monomer composition is polymerized, in this case, a temperature of the monomer composition at the time of the start of polymerization is 30°C or higher, a polymerization time from the start of polymerization until a polymerization temperature reaches a maximum temperature is 30 minutes or shorter, the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C. The production method may optionally include a gel-crushing step of crushing the crosslinked hydrogel polymer simultaneously with the polymerization step or after the polymerization step.

A production method for a water-absorbing resin of the present invention (third production method) is a production method for a water-absorbing resin, including a polymerization step of polymerizing a monomer composition containing an internal crosslinking agent and a monomer to obtain a crosslinked hydrogel polymer, a gel-crushing step of crushing the crosslinked hydrogel polymer simultaneously with the polymerization step or after the polymerization step, and a drying step of drying the crosslinked hydrogel polymer to obtain a dry polymer, in which in the gel-crushing step, 50 to 10000 ppm of hydrogen peroxide with respect to the solid content mass of the crosslinked hydrogel polymer is added, and the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C.

**BRIEF DESCRIPTION OF DRAWINGS**

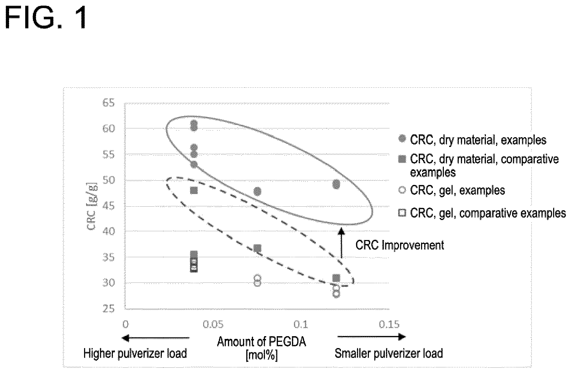

Fig. 1 is a graph showing results of Examples.

**DESCRIPTION OF EMBODIMENTS**

Hereinafter, the present invention will be described in detail, but the scope of the present invention is not limited to these descriptions, and can be appropriately changed from the following examples and implemented as long as the gist of the present invention is not impaired. The present invention is not limited to the following embodiments, and can be variously modified within the scope indicated in the claims. The present invention also encompasses, in its technical scope, other embodiments obtained by appropriately combining the technical means disclosed in the following embodiments.

[1] Definitions of terms

[1-1] "Water-absorbing resin"

The term "water-absorbing resin" in the present invention refers to a water swellable and water insoluble polymer gelling agent that satisfies the following physical properties. That is, the term "water-absorbing resin" refers to a polymer gelling agent having a CRC (centrifuge retention capacity), which is specified in NWSP 241.0.R2(15) (NWSP will be described below) as a water swellable property index, of 5 g/g or more and having Ext (water soluble component), which is specified in NWSP 270.0.R2(15) as a water insoluble property index, of 50 mass% or less.

The water-absorbing resin can be designed according to its use and the purpose, and is not particularly limited. However, the water-absorbing resin is preferably a hydrophilic crosslinked polymer obtained by (internally) crosslinking and polymerizing unsaturated monomers having an acid group (preferably a carboxyl group). The water-absorbing resin is not limited to an embodiment in which the whole amount is a crosslinked polymer, and may be a composition containing an additive or the like.

The water-absorbing resin in the present invention may be subjected to surface crosslinking (in other words, post-crosslinking or secondary crosslinking) or may be not subjected to surface crosslinking. In the present invention, a water-absorbing resin that has been subjected to a predetermined surface crosslinking treatment may be separately referred to as a surface-crosslinked water-absorbing resin.

[1-2] "Water-absorbing agent"

The term "water-absorbing agent" in the present invention indicates an aqueous-liquid-absorbing gelling agent containing a water-absorbing resin as a main component. The water-absorbing agent according to the present invention is suitably used as an absorbent article for absorbing aqueous liquids, and particularly suitably used as an absorbent body of an absorbent article such as a disposable diaper (for infants or adults), a sanitary napkin, or an incontinence pad. The water-absorbing agent of the present invention may contain a water-absorbing resin at a content of preferably 60 to 100 mass%, 70 to 100 mass%, 80 to 100 mass%, or 90 to 100 mass%, and various additives as described below may be contained as other components. That is, water-absorbing resin compositions integrated with these components are also within the scope of the water-absorbing agent.

[1-3] Definitions of evaluation methods

"NWSP" refers to "Non-Woven Standard Procedures-Edition 2015", and EDANA (European Disposables And Nonwovens Association) and INDA (Association of the Nonwoven Fabrics Industry) jointly issued a unified evaluation method for nonwoven fabrics and products thereof in the United States and Europe, and "NWSP" indicates a standard measurement method for a water-absorbing resin. Unless otherwise specified, in the present invention, the physical properties of the water-absorbing resin are measured in accordance with "Non-Woven Standard Procedures-Edition 2015". In the case of a measurement method not described in NWSP, measurement is performed in accordance with the method under the condition described in Examples.

[1-4] Others

In the present description, the phrase "X to Y" indicating a range means "X or more and Y or less". Unless otherwise specified, the term "ton (t)", which is a unit of mass, means "metric ton", and the term "ppm" means "ppm by mass" or "ppm by weight". Moreover, the terms "mass" and "weight", "parts by mass" and "parts by weight", and "mass%" and "wt%" are treated as synonyms for each other. Furthermore, the term "... acid (salt)" means "... acid and/or its salt", and the term " (meth) acrylic" means "acrylic and/or methacrylic".

[2] Method for producing water-absorbing resin

The production method according to the present invention is a production method for a water-absorbing resin, including a polymerization step of polymerizing a monomer composition containing an internal crosslinking agent and a monomer to obtain a crosslinked hydrogel polymer, and a drying step of drying the crosslinked hydrogel polymer to obtain a dry polymer, in which the crosslinked hydrogel polymer to be subjected to the drying contains 50 ppm or more of hydrogen peroxide with respect to the solid content mass of the crosslinked hydrogel polymer, and the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C.

Alternatively, the production method according to the present invention is a production method for a water-absorbing resin, including a polymerization step of polymerizing a monomer composition containing an internal crosslinking agent and a monomer to obtain a crosslinked hydrogel polymer, and a drying step of drying the crosslinked hydrogel polymer to obtain a dry polymer, in which in the polymerization step, a monomer composition having a monomer concentration of 30 mass% or more and containing 50 to 10000 ppm of hydrogen peroxide with respect to the solid content mass of the monomer composition is polymerized, wherein a temperature of the monomer composition at the time of the start of polymerization is 30°C or higher, a polymerization time from the start of polymerization until a polymerization temperature reaches a maximum temperature is 30 minutes or shorter, the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C. The production method may optionally include a gel-crushing step of crushing the crosslinked hydrogel polymer simultaneously with the polymerization step or after the polymerization step.

Alternatively, the production method according to the present invention is a production method for a water-absorbing resin, including a polymerization step of polymerizing a monomer composition containing an internal crosslinking agent and a monomer to obtain a crosslinked hydrogel polymer, a gel-crushing step of crushing the crosslinked hydrogel polymer simultaneously with the polymerization step or after the polymerization step, and a drying step of drying the crosslinked hydrogel polymer to obtain a dry polymer, in which in the gel-crushing step, 50 to 10000 ppm of hydrogen peroxide with respect to the solid content mass of the crosslinked hydrogel polymer is added, and the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C.

According to such a production method, the adhesion of the hydrogel to a production apparatus is small, and the load on a crushing device is small when the hydrogel is crushed, so that the handleability in the production process of the water-absorbing resin is improved, and the production efficiency is improved. The absorption capacity without pressure of the resulting water-absorbing resin is high.

In the present production method, a polymer is crosslinked by an internal crosslinking agent. By having such a crosslinked structure, a strength of the hydrogel is increased, and the adhesiveness of the hydrogel is lowered. Therefore, adhesion to a polymerization device or the like is reduced, and when the hydrogel is crushed, load on a crushing device is reduced. On the other hand, when the crosslinking density in the polymer increases due to internal crosslinking, the water absorption performance of the water-absorbing resin, particularly, the absorption capacity without pressure tends to decrease. It is caused that swelling of the water-absorbing resin is suppressed because of increasing the crosslinking density. In the present production method, the crosslinked hydrogel polymer before drying contains hydrogen peroxide at a specific concentration (ppm). By heating the crosslinked hydrogel polymer containing hydrogen peroxide to a temperature exceeding 160°C, the fluid retention capacity can be efficiently improved.

Therefore, according to the present production method, in the production process, handleability and workability can be facilitated by making the crosslinked structure in the polymer dense, production efficiency can be improved, and after the drying step, the crosslinked structure is made sparse to some extent, so that water absorption characteristics, particularly absorption capacity without pressure, of the resulting water-absorbing resin can be improved.

The above estimation does not limit the technical scope of the present invention at all.

The present production method includes, for example, (1) a step of preparing a monomer composition containing an internal crosslinking agent and a monomer, (2) a polymerization step of polymerizing the monomer composition to obtain a crosslinked hydrogel polymer, and (4) a drying step, and includes, as necessary, (3) a gel-crushing step and (5) a surface crosslinking step. The gel-crushing step is a step of crushing the crosslinked hydrogel polymer obtained in the polymerization step simultaneously with polymerization and/or after polymerization to obtain a crosslinked particulate hydrogel polymer (hereinafter, also referred to as "particulate hydrogel").

Hydrogen peroxide is added in any production process before drying of the crosslinked hydrogel polymer.

Specifically, hydrogen peroxide is preferably added to any one or more production processes of the following (1) to (4):

(1) a step of preparing a monomer composition containing an internal crosslinking agent and a monomer (Embodiment 1);
(2) a polymerization step of polymerizing the monomer composition to obtain a crosslinked hydrogel polymer (Embodiment 2);
(3) a gel-crushing step (Embodiment 3); and
(4) a fine powder granulating step (Embodiment 4).

It is more preferable that hydrogen peroxide is preferably added to any one or more production processes of the above (1) to (3).

The method of adding hydrogen peroxide is not particularly limited, but from the viewpoint of ease of addition, hydrogen peroxide is preferably added in a state of being dissolved in an aqueous solution. The concentration of hydrogen peroxide in the aqueous solution is not particularly limited, but is usually about 1 to 40 mass%. As water used for the aqueous hydrogen peroxide solution, for example, deionized water (ion-exchanged water), pure water, ultrapure water, distilled water, or the like can be used. The aqueous hydrogen peroxide solution may contain a small amount of a hydrophilic solvent. Examples of the hydrophilic solvent include alcohols such as methyl alcohol, ethyl alcohol, n-propyl alcohol, isopropyl alcohol, n-butyl alcohol, isobutyl alcohol, and t-butyl alcohol. The solvent used in combination is used at, for example, 0 to 10 mass% with respect to water. The temperature at which hydrogen peroxide or an aqueous hydrogen peroxide solution is added is not particularly limited as long as it is a temperature at which the solution to be added can maintain fluidity, and may be, for example, in a range of -10 to 100°C and is more preferably 0 to 30°C.

The crosslinked hydrogel polymer and/or the dry polymer is heated so that the maximum reaching temperature thereof exceeds 160°C after the drying step.

Specifically, in the following steps, the crosslinked hydrogel polymer and/or the dry polymer is preferably heated so that the maximum reaching temperature thereof exceeds 160°C.

(A) drying step of drying the crosslinked hydrogel polymer to obtain a dry polymer (Embodiment A); and
(B) a heat treatment step of surface crosslinking (Embodiment B).

Hereinafter, each step will be described in detail.

[2-1] Step of preparing monomer composition

This is a step of preparing a monomer composition containing a monomer forming a polymer and an internal crosslinking agent (hereinafter, also simply referred to as the composition). The monomer composition is usually an aqueous solution containing a monomer and an internal crosslinking agent. A slurry solution of a monomer (dispersion having a concentration exceeding the saturated concentration of the monomer) can be also used as long as the water absorption performance of the obtained water-absorbing resin does not deteriorate, but in this section, such a slurry solution is also included in the monomer composition for convenience.

The monomer to be used preferably contains an acid group-containing unsaturated monomer as a main component. Here, the term "main component" means that the amount of the acid group-containing unsaturated monomer used (contained) is usually 50 mol% or more, preferably 70 mol% or more, and more preferably 90 mol% or more (with an upper limit of 100 mol%), with respect to the total amount of monomers (excluding an internal crosslinking agent) to be subjected to a polymerization reaction of a water-absorbing resin.

The acid group in the acid group-containing unsaturated monomer is not particularly limited, and examples of the acid group include a carboxyl group, a sulfone group, and a phosphate group. Examples of the acid group-containing unsaturated monomer include (meth)acrylic acid, (anhydride) maleic acid, itaconic acid, cinnamic acid, vinylsulfonic acid, allyltoluenesulfonic acid, vinyltoluenesulfonic acid, styrene sulfonic acid, 2-(meth)acrylamide-2-methylpropanesulfonic acid, 2-(meth)acryloyloxyethanesulfonic acid, 2-(meth)acryloyloxypropanesulfonic acid, 2-hydroxyethyl(meth)acryloyl phosphate, and the like. From the viewpoint of water absorption performance, (meth)acrylic acid, (anhydrous) maleic acid, itaconic acid, and cinnamic acid are preferable, (meth)acrylic acid is more preferable, and acrylic acid is most preferable.

It is preferable that some or all of the acid groups included in the acid group-containing unsaturated monomer contained in the composition are neutralized. As the salt of the acid group-containing unsaturated monomer, a salt with an inorganic cation such as an alkali metal salt, an alkaline earth metal salt, or an ammonium salt, and a salt with a basic substance such as an amine-based organic compound having an amino group or an imino group are appropriately selected and used. Among them, a salt with a monovalent cation is more preferable, at least one selected from an alkali metal salt, an ammonium salt, and an amine salt is more preferable, and an alkali metal salt is still more preferable. Among the alkali metal salts, at least one selected from a sodium salt, a lithium salt, and a potassium salt is more preferable, and a sodium salt is particularly preferable. The neutralization of the acid group included in the acid group-containing unsaturated monomer is not limited to the stage of being performed in the present step, and may be performed at any stage of the production process. From the viewpoint of uniformly neutralizing the acid group-containing unsaturated monomer, the neutralization of the acid group included in the acid group-containing unsaturated monomer is preferably performed before the step of drying the crosslinked particulate hydrogel polymer. That is, the neutralization of the acid group included in the acid group-containing unsaturated monomer is preferably performed in any of the step of preparing a monomer composition and the gel-crushing step simultaneously with polymerization and/or after polymerization. The neutralization thereof is still more preferably performed in the step of preparing a monomer composition.

The neutralizing agent used to neutralize the above-mentioned acid group-containing unsaturated monomer is not particularly limited as long as it is salt containing a cation constituting the salt of the acid group-containing unsaturated monomer, and an inorganic salt such as sodium hydroxide, potassium hydroxide, sodium carbonate, or ammonium carbonate, or a basic substance such as an amine-based organic compound having an amino group or an imino group is appropriately selected and used. As the neutralizing agent, two or more basic substances may be used in combination.

In order to solve the problems of the present invention, the number of moles of the neutralized salt with respect to the total number of moles of the acid group-containing unsaturated monomer and its neutralized salt (hereinafter, referred to as "rate of neutralization") is finally preferably 40 mol% or more, more preferably 45 mol% or more, and still more preferably 50 mol% or more. From the viewpoint of water absorption performance, the rate of neutralization is 80 mol% or less, 78 mol% or less, or 75 mol% or less in this order of preference. The rate of neutralization is adjusted to, for example, 40 mol% to 80 mol%, 45 mol% to 78 mol%, or 50 mol% to 75 mol%. A preferred range of the rate of neutralization is the same even in the case of postneutralization (neutralization in the hydrogel polymer). When the rate of neutralization is low, adhesiveness of the crosslinked hydrogel polymer obtained after polymerization is increased, and adhesion to an apparatus may be increased.

The rate of neutralization may be adjusted before the start of the polymerization reaction of the acid group-containing unsaturated monomer or during the polymerization reaction of the acid group-containing unsaturated monomer, or the rate of neutralization may be adjusted in the crosslinked hydrogel polymer obtained after the completion of the polymerization reaction of the acid group-containing unsaturated monomer (postneutralization). The rate of neutralization may be adjusted in any one stage selected from the stage before the start of the polymerization reaction, the stage during the polymerization reaction, and the stage after the completion of the polymerization reaction, or may be adjusted in a plurality of stages. The addition of the neutralizing agent may be performed once or in multiple stages (for example, two-stage neutralization). The two-stage neutralization is to add the neutralizing agent in two stages.

As a preferred embodiment, when the crosslinked hydrogel polymer is obtained by polymerizing an internal crosslinking agent and a monomer, the monomer contains an acid group-containing unsaturated monomer as a main component, and the number of moles (rate of neutralization) of the neutralized salt with respect to the total number of moles of the acid group-containing unsaturated monomer and its neutralized salt is 50 mol% or more. By performing neutralization to some extent before polymerization as described above, a uniformly neutralized hydrogel polymer can be obtained, and uniform surface crosslinking is achieved when a surface treatment step is performed.

A monomer other than the acid group-containing unsaturated monomer may be contained in the composition.

The monomer other than the acid group-containing unsaturated monomer may be any compound that can be polymerized into a water-absorbing resin. Examples of such a monomer include amide group-containing unsaturated monomers such as (meth)acrylamide, N-ethyl (meth)acrylamide, and N,N-dimethyl (meth)acrylamide, amino group-containing unsaturated monomers such as N,N-dimethylaminoethyl (meth)acrylate, N,N-dimethylaminopropyl (meth)acrylate, and N,N-dimethylaminopropyl (meth)acrylamide, mercapto group-containing unsaturated monomers, phenolic hydroxyl group-containing unsaturated monomers, and lactam group-containing unsaturated monomers such as N-vinylpyrrolidone.

In order to solve the problems of the present invention, the monomer concentration in the composition (= total monomer amount/composition amount, wherein the monomer also includes a monomer other than the acid group-containing unsaturated monomer) is preferably 10 mass% to 90 mass%, more preferably 20 mass% to 80 mass%, still more preferably 30 mass% to 70 mass%, and particularly preferably 40 mass% to 60 mass% from the viewpoint of the physical properties and the productivity of the water-absorbing resin. When the monomer concentration in the composition is in the above range, adhesion of the crosslinked hydrogel polymer after polymerization to a production apparatus or the like can be further reduced.

The composition contains an internal crosslinking agent. By using the internal crosslinking agent, adhesiveness of the resulting crosslinked hydrogel polymer can be reduced, and adhesion and excessive load to a production apparatus can be suppressed.

The internal crosslinking agent is to have two or more unsaturated bonds or reactive functional groups in total in one molecule. Examples of the internal crosslinking agent having a plurality of polymerizable unsaturated groups (copolymerizable with a monomer) in the molecule include N,N-methylenebis(meth)acrylamide, (poly)ethylene glycol di(meth)acrylate, (poly)propylene glycol di(meth)acrylate, trimethylolpropane tri(meth)acrylate, glycerin (meth)acrylate, glycerin acrylate methacrylate, ethylene oxide-modified trimethylolpropane tri(meth)acrylate, pentaerythritol hexa(meth)acrylate, triallyl cyanurate, triallyl isocyanurate, triallyl phosphate, trimethylolpropane di(meth)allyl ether, poly(meth)allyl ether of a polyol having 2 to 10 carbon atoms, pentaerythritol triallyl ether, tetraallyloxyethane, and the like. Examples of the internal crosslinking agent having a plurality of reactive functional groups (capable of reacting with a functional group of a monomer (for example, a carboxy group)) in the molecule include triallylamine, polyallyloxyalkanes, (poly)ethylene glycol diglycidyl ether, glycerol diglycidyl ether, ethylene glycol, polyethylene glycol, propylene glycol, glycerin, 1,4-butanediol, pentaerythritol, ethylenediamine, ethylene carbonate, propylene carbonate, and polyethyleneimine (here, the cyclic carbonates such as ethylene carbonate are a crosslinking agent that reacts with a carboxyl group to further generate a functional group OH). Examples of the internal crosslinking agent having a polymerizable unsaturated group and a reactive functional group in the molecule include glycidyl (meth)acrylate. Two or more of these may be used in combination.

Among these internal crosslinking agents, from the viewpoint of the effect of the present invention, a compound having a plurality of polymerizable unsaturated groups in the molecule is preferable, a compound having a (poly)alkylene oxide structure in the molecule is more preferable, a compound having a polyethylene glycol structure is still more preferable, an acrylate compound having a polyethylene glycol structure is even more preferable, (poly)ethylene glycol di(meth)acrylate and (poly)propylene glycol di(meth)acrylate are particularly preferable, and polyethylene glycol diacrylate is most preferable. In the hydrogel obtained using these internal crosslinking agents, an effect that the fluid retention capacity (particularly, absorption capacity without pressure) is remarkably improved by heating in the drying step or the subsequent steps is obtained.

In order to solve the problems of the present invention, the amount of the internal crosslinking agent used is appropriately set according to, for example, the kinds of the monomer and the internal crosslinking agent. From the viewpoint of increasing the gel strength of the resulting water-absorbing resin and preventing adhesion of the hydrogel to a polymerization device or the like, the amount of the internal crosslinking agent used in the polymerization step is preferably 0.005 mol% or more, more preferably 0.01 mol% or more, and still more preferably 0.02 mol% or more, with respect to the total amount of monomers used. From the viewpoint of improving the water absorption performance of the water-absorbing resin, the amount to use thereof is preferably 5 mol% or less and more preferably 2 mol% or less, and may be 1 mol% or less, 0.5 mol% or less, less than 0.1 mol%, or 0.05 mol% or less. When the amount of the internal crosslinking agent used is too small, the adhesiveness of the crosslinked hydrogel polymer increases, and when the amount of the internal crosslinking agent used is too large, the fluid retention capacity of the resulting water-absorbing resin may decrease.

As water used for the monomer composition, for example, deionized water (ion-exchanged water), pure water, ultrapure water, distilled water, or the like can be used, but deionized water (ion-exchanged water) is preferable.

The monomer composition may contain a small amount of a hydrophilic solvent. Examples of the hydrophilic solvent include alcohols such as methyl alcohol, ethyl alcohol, n-propyl alcohol, isopropyl alcohol, n-butyl alcohol, isobutyl alcohol, and t-butyl alcohol. The hydrophilic solvent used in combination is used at, for example, 0 to 10 mass% with respect to water.

• Other substances

Substances exemplified below (hereinafter, referred to as "other substances") can also be added to the monomer composition as long as an object of the present invention is achieved.

Specific examples of other substances include a polymerization inhibitor; chain transfer agents such as thiols, thiolates, secondary alcohols, amines, and hypophosphites, foaming agents such as carbonates, bicarbonates, azo compounds, and bubbles, chelating agents such as ethylenediaminetetra(methylenephosphinic acid) and its metal salts, ethylenediaminetetraacetic acid and its metal salts, and diethylenetriaminepentaacetic acid and its metal salts, and hydrophilic polymers such as polyacrylic acid (salts) and crosslinked bodies thereof (such as fine powder formed from a water-absorbing resin), starch, cellulose, starch-cellulose derivatives, and polyvinyl alcohol. Other substances may be used singly or in combination of two or more kinds thereof.

The amount of other substances used is not particularly limited, but the total concentration of other substances is preferably 10 mass% or less, more preferably 0.001 mass% to 5 mass%, and particularly preferably 0.01 mass% to 1 mass%, with respect to the total amount of the monomers.

In the present invention, it is characterized that the crosslinked hydrogel polymer to be subjected to the drying step contains 50 ppm or more of hydrogen peroxide with respect to the solid content, and is heated at a temperature exceeding 160°C (preferably 170 to 220°C) during the drying step and/or after the drying step. As a method for obtaining a crosslinked hydrogel polymer containing 50 ppm or more of hydrogen peroxide with respect to the solid content, either (1) a method of preparing the crosslinked hydrogel polymer until the polymerization step or (2) a method of preparing the crosslinked hydrogel polymer after the polymerization step and before the drying step, which will be described below, may be used, and the methods (1) and (2) may be used in combination.

Specific examples of the method for adjusting the content of hydrogen peroxide in the hydrogel polymer include the following (1) and (2).

Method (1) for adjusting content of hydrogen peroxide until polymerization step;

This is a method in which in the step of preparing a monomer composition or the polymerization step, a predetermined amount of hydrogen peroxide is added, and polymerization conditions (for example, polymerization time, polymerization temperature, adjustment of the amount used of a decomposition accelerator for hydrogen peroxide, such as an ultraviolet ray or a reducing agent, combined use of a stabilizer for hydrogen peroxide, and the like) in which 50 ppm or more of hydrogen peroxide remains after polymerization are selected. In other words, as a method for adding hydrogen peroxide, it is possible to select addition of hydrogen peroxide in the step of preparing a monomer composition (Embodiment 1) and addition of hydrogen peroxide in the polymerization step (Embodiment 2). At this time, preferable polymerization conditions are not particularly limited as long as the amount of hydrogen peroxide remaining in the crosslinked hydrogel polymer after polymerization is 50 ppm or more, but a second production method described below (a method of performing high temperature initiation/high concentration/short-time polymerization in the presence of 50 ppm or more of hydrogen peroxide) is preferable.

Method (2) for adjusting content of hydrogen peroxide after polymerization step and before drying step;

Hydrogen peroxide is added to the crosslinked hydrogel polymer after the polymerization step (including hydrogen peroxide optionally used in the polymerization step) to adjust the content of the hydrogen peroxide to 50 ppm or more. Specifically, hydrogen peroxide may be added until the drying step after the completion of the polymerization step. Examples of the addition timing of hydrogen peroxide include addition of hydrogen peroxide to the crosslinked hydrogel polymer so as to have a hydrogen peroxide content of 50 ppm or more in a transport step of transporting the hydrogel polymer discharged from a polymerization device after polymerization to subsequent steps, a (optionally provided) storing step, a (optionally provided) aging step, and a gel-crushing step and between these steps, and of these, addition of hydrogen peroxide in a gel-crushing step (Embodiment 3) is preferable. This adjustment method can be selected as a third production method described below (a method of adding 50 ppm or more of hydrogen peroxide in the gel-crushing step after the polymerization step).

(Embodiment 1)

In Embodiment 1, hydrogen peroxide is added in a step of preparing a monomer composition containing an internal crosslinking agent and a monomer. That is, a monomer composition containing hydrogen peroxide and a monomer is obtained, and the monomer is polymerized in the next step using the composition.

The order of addition of the monomer, the internal crosslinking agent, and hydrogen peroxide is not particularly limited, and any embodiment in which hydrogen peroxide is added to an aqueous solution containing the monomer and the internal crosslinking agent; the monomer, the internal crosslinking agent, and hydrogen peroxide are simultaneously added to water; the monomer and the internal crosslinking agent are added to an aqueous hydrogen peroxide solution; or the like may be employed.

In Embodiment 1, when hydrogen peroxide is contained in the monomer composition, the amount of hydrogen peroxide added is preferably 50 ppm or more with respect to the monomer composition (solid content), although it depends on the polymerization conditions (polymerization time, polymerization temperature, and the like), in consideration of the physical properties of the resulting water-absorbing resin, particularly, improvement of the absorption capacity without pressure. That is, as one of preferred embodiments of the present invention, a crosslinked hydrogel polymer is obtained by polymerizing a monomer composition containing 50 ppm or more of hydrogen peroxide with respect to the solid content in the next polymerization step. The solid content refers to the total mass of monomers in the monomer composition. The polymerization conditions may be appropriately selected so as to have a desired hydrogen peroxide concentration as described above, and the amount (ppm) of hydrogen peroxide remaining in the hydrogel polymer after polymerization may be measured. When hydrogen peroxide is contained in the composition in Embodiment 1, the amount of hydrogen peroxide added is preferably 50 ppm (0.005 mass%) to 10000 ppm (1.0 mass%), and more preferably 100 ppm (0.01 mass%) to 5000 ppm (0.5 mass%), with respect to the monomer composition (solid content (total mass of the monomers)). Embodiment 1 may be combined, for example, with one or more of Embodiment 2 to Embodiment 4 other than Embodiment 1, and in this case, the amount of hydrogen peroxide added is appropriately adjusted so as to be 50 ppm or more of hydrogen peroxide with respect to the solid content mass of the crosslinked hydrogel polymer.

[2-2] Polymerization step

This is a step of polymerizing the monomer composition to obtain a crosslinked hydrogel polymer (hereinafter, referred to as "hydrogel" in some cases).

A polymerization initiator or the like added to the monomer composition is decomposed to generate a reaction initiation terminal, whereby a polymerization reaction can be performed. The polymerization initiator may be added in advance to the composition containing a monomer and an internal crosslinking agent. The polymerization initiator is appropriately selected according to the form of polymerization and the like, and thus is not particularly limited. Examples of the polymerization initiator include thermal decomposition polymerization initiators, photolytic polymerization initiators, combination thereof, and redox polymerization initiators to be used in combination with a reducing agent that promotes decomposition of a polymerization initiator. Specifically, one or more of the polymerization initiators disclosed in U.S. Patent No. 7265190 are used. Among them, in the high temperature initiation polymerization as a preferred embodiment, a thermal decomposition polymerization initiator is preferable from the viewpoint of polymerization efficiency. Note that a peroxide or an azo compound is preferably used, a peroxide is more preferably used, and a persulfate such as sodium persulfate, ammonium persulfate, or potassium persulfate is still more preferably used, from the viewpoint of the handleability of the polymerization initiator and the physical properties of the water-absorbing resin. Hydrogen peroxide is known as a polymerization initiator, particularly an oxidizing agent of a redox polymerization initiator, but in consideration of polymerization efficiency, hydrogen peroxide is preferably used in combination with other thermal decomposition polymerization initiator as the polymerization initiator in the present embodiment, and particularly preferably used in combination with a persulfate.

In the present embodiment, hydrogen peroxide can also be used as an oxidizing agent of a redox polymerization initiator, and can be used in combination with a reducing compound such as L-ascorbic acid or sodium bisulfite. In the present invention, a preferred embodiment is an embodiment in which a sufficient amount of hydrogen peroxide remains in the crosslinked hydrogel polymer after the polymerization step in the drying step as described above, and the crosslinked hydrogel polymer to be subjected to drying may contain 50 ppm or more of hydrogen peroxide with respect to the solid content mass thereof. That is, when a redox polymerization initiator using a reducing agent and an oxidizing agent in combination is used, it is preferable to add an excessive amount of hydrogen peroxide with respect to the amount of the reducing compound added so that a sufficient amount of hydrogen peroxide remains in the crosslinked hydrogel polymer after the polymerization step in the drying step. The amount (ppm) of hydrogen peroxide added is preferably 10 times or more by mole, more preferably 100 times or more by mole, and still more preferably 1000 times or more by mole with respect to the reducing compound. An embodiment in which the polymerization is performed without using a reducing compound such as L-ascorbic acid or sodium bisulfite which is able to decompose hydrogen peroxide is more preferable. The preferable amount of the reducing compound added is preferably 10 ppm or less, more preferably 1 ppm or less, still more preferably 0.1 ppm or less, and most preferably substantially 0 ppm (absent) with respect to the solid content mass of the crosslinked hydrogel polymer. In the present embodiment, a particularly preferred embodiment is that the reducing compound is in the above range (particularly absent), and the polymerization initiator is composed only of hydrogen peroxide and a persulfate.

The amount used of the polymerization initiator other than hydrogen peroxide, which is a thermal decomposition polymerization initiator or a photolytic polymerization initiator, is preferably 0.001 mol% to 1 mol%, more preferably 0.001 mol% to 0.5 mol%, still more preferably 0.005 to 0.5 mol%, and even more preferably 0.01 to 0.5 mol%, with respect to the total amount of the monomers.

In addition to the above-described method in which a polymerization initiator is decomposed to perform a polymerization reaction, a method is available in which irradiation with an active energy ray such as a radiation, an electron beam, or an ultraviolet ray is used. Furthermore, addition of a polymerization initiator and irradiation with an active energy ray may be used in combination.

The polymerized form is not particularly limited. From the viewpoint of water absorption performance, ease of controlling polymerization, or the like, droplet polymerization in a vapor phase, aqueous solution polymerization, and reversed-phase suspension polymerization (droplet polymerization in a hydrophobic organic solvent is also included and an example of reversed phase suspension) are preferable, aqueous solution polymerization and reversed-phase suspension polymerization are more preferable, and aqueous solution polymerization is still more preferable. For details of the reversed-phase suspension polymerization, reference can be made to [0016] to [0033] of Japanese Patent No. 4969778, specifically, Example 1. Among them, continuous aqueous solution polymerization is particularly preferable, examples thereof include continuous belt polymerization and continuous kneader polymerization, and continuous belt polymerization is more suitable. Using the continuous aqueous solution polymerization improves the production efficiency of a water-absorbing resin. The polymerization may be performed in a batch manner. The polymerization may be performed by a static polymerization method.

In order to solve the problems of the present invention, examples of a preferable form of the continuous aqueous solution polymerization include forms of "high temperature initiation polymerization" and "high concentration polymerization". The term "high temperature initiation polymerization" refers to a form in which polymerization is initiated at a temperature of a monomer composition of preferably 30°C or higher, more preferably 35°C or higher, still more preferably 40°C or higher, and particularly preferably 50°C or higher (with an upper limit of the boiling point), and the term "high concentration polymerization" refers to a form in which polymerization is performed at a monomer concentration in the monomer composition of preferably 30 mass% or more, more preferably 35 mass% or more, still more preferably 40 mass% or more, and particularly preferably 45 mass% or more (with an upper limit of the saturated concentration). These forms of polymerization can also be used in combination. By adopting these polymerization methods ("high temperature initiation polymerization" and "high concentration polymerization"), the adhesion of the crosslinked hydrogel polymer to a production apparatus can be further reduced, and the added hydrogen peroxide can remain in the crosslinked hydrogel polymer in an amount of 50 ppm or more.

In order to set the monomer composition to a desired temperature (for example, 40°C or higher), the polymerization container itself may be heated, or the monomer composition may be heated in a line when the monomer composition is supplied to the polymerization container. Preferably, neutralization is performed during the preparation of the monomer composition, and the heat of neutralization of the monomer is used for raising the temperature of the monomer composition. Because the heat of neutralization and/or the heat of hydration can be effectively utilized not only for raising the temperature of the monomer composition but also for removing dissolved oxygen of the monomer composition, neutralization during the preparation of the monomer composition is preferred.

In order to effectively utilize the heat of neutralization and/or the heat of hydration as described above, it is preferable to perform neutralization in an adiabatic state, and it is more preferable to continuously perform polymerization while continuously performing neutralization . Therefore, for example, it is preferable to use a container in which heat dissipation is suppressed as much as possible, and resin, rubber as a material, or a container of which a non-contact material portion made of stainless steel is covered with a heat insulating material, or the like is preferably used.

In order to solve the problems of the present invention, the polymerization time may be appropriately determined according to the type of the monomer and the polymerization initiator, the polymerization temperature, and the like, but from the viewpoint of the residual amount of hydrogen peroxide after polymerization, the polymerization time (from the start of polymerization until the polymerization temperature reaches the maximum temperature) is preferably short (preferably short-time polymerization), and specifically preferably 30 minutes or less, more preferably 20 minutes or less, still more preferably 10 minutes or less, even more preferably 5 minutes or less, and particularly preferably 2 minutes or less. In the reversed-phase suspension polymerization as in Patent Literatures 8 to 11, since the heating time for polymerization is generally as long as 1 hour or longer, there is a problem from the viewpoint of the residual amount of hydrogen peroxide after polymerization, or it is difficult to perform heating at 160°C or higher in the drying step or the like after polymerization since a large amount of a hydrophobic organic solvent is used. Even in the aqueous solution polymerization for a long time described in Patent Literature 14, there is a problem from the viewpoint of the residual amount of hydrogen peroxide after polymerization, and thus in order to solve the problems of the present invention, the high temperature initiation polymerization is more preferable in the short-time polymerization. The use of hydrogen peroxide as a polymerization initiator in Patent Literatures 8, 14, and the like is also known, but Patent Literature 8 (reversed-phase suspension polymerization for a long time) and Patent Literature 14 (redox polymerization for a long time) do not suggest the residual amount of hydrogen peroxide after polymerization and the problem/effect of the present application. The means for carrying out the polymerization in a short time is not limited, and examples thereof include the high temperature initiation polymerization described above.

Therefore, in a preferred embodiment, in the polymerization step, the monomer concentration of the monomer composition is 30 mass% or more, the temperature of the monomer composition at the start of polymerization is 30°C or higher, and the polymerization time from the start of polymerization until the polymerization temperature reaches the maximum temperature is 30 minutes or shorter. The polymerization initiation refers to a time point when a temperature rise of the monomer composition is observed. The lower limit of the polymerization time is not particularly limited as long as the polymerization proceeds sufficiently, but is preferably 5 seconds or longer, more preferably 10 seconds or longer, and still more preferably 15 seconds or longer. In another preferred embodiment, in the polymerization step, a monomer composition having a monomer concentration of 30 mass% or more and containing 50 to 10000 ppm of hydrogen peroxide with respect to the solid content mass of the monomer composition is polymerized, and at this time, the temperature of the monomer composition at the start of polymerization is 30°C or higher, and the polymerization time from the start of polymerization until the polymerization temperature reaches the maximum temperature is 30 minutes or shorter.

In order to solve the problems of the present invention, the solid content ratio of the hydrogel (hereinafter, gel solid content ratio) is preferably 25 mass% or more, more preferably 25 mass% to 75 mass%, still more preferably 25 mass% to 65 mass%, even still more preferably 25 mass% or more and less than 60 mass%, and particularly preferably 40 mass% or more and less than 60 mass%. Means for setting these concentrations is not particularly limited, but for example, the above-described "high temperature initiation polymerization" and/or "high concentration polymerization" is suitably used. The gel solid content ratio (mass%) is measured by the method described in Examples below. When the gel solid content ratio (mass%) is low, the adhesiveness of the gel may increase. When the gel solid content ratio is excessively high, deterioration in physical properties such as a fluid retention capacity (g/g) may be observed, or it may be difficult to perform gel-crushing that is performed as necessary. When the gel solid content ratio is high, the effect of hydrogen peroxide may be less likely to be exhibited.

(Embodiment 2)

In Embodiment 2, hydrogen peroxide is added in the polymerization step (particularly, the monomer composition in a polymerizer). The addition timing of hydrogen peroxide is not particularly limited, but specific examples thereof include an embodiment of adding hydrogen peroxide immediately before polymerization of the monomer composition (specifically, for example, an embodiment of adding hydrogen peroxide simultaneously with a polymerization initiator); an embodiment of adding hydrogen peroxide during polymerization of the monomer (specifically, for example, an embodiment of adding hydrogen peroxide in the gel-crushing step during the polymerization step, such as a case where polymerization and gel-crushing are simultaneously performed as in continuous kneader polymerization); an embodiment of adding hydrogen peroxide to the hydrogel obtained by polymerization of the monomer composition; and the like. As described above, in the adjusting method (1) up to the polymerization step, the above Embodiment 2 can be employed.

The hydrogen peroxide in the polymerization step may be added to the monomer before polymerization (rate of polymerization: 0%) or may be added to a mixture of the hydrogel and the monomer after the start of polymerization (rate of polymerization: more than 0%), or these addition methods may be used in combination. Although a technique of using 50 ppm or more of hydrogen peroxide in polymerization (for example, Patent Literature 1) is known, the residual amount of hydrogen peroxide after polymerization greatly varies depending on polymerization conditions (polymerization time, polymerization temperature, and the like), and since Patent Literature 1 does not suggest heating at 160°C or higher after polymerization, use of 50 ppm or more of hydrogen peroxide during polymerization (for example, Patent Literature 1) does not suggest the present invention at all.

The amount of hydrogen peroxide added to the hydrogel is appropriately set in consideration of the polymerization conditions to be selected and the amount (ppm) of hydrogen peroxide remaining before drying, but, for example, in consideration of the physical properties of the resulting water-absorbing resin, particularly, improvement of the absorption capacity without pressure (g/g), the amount of hydrogen peroxide added is preferably 50 ppm (0.005 mass%) or more, more preferably 50 ppm (0.005 mass%) to 10000 ppm (1.0 mass%), and still more preferably 100 ppm (0.01 mass%) to 5000 ppm (0.5 mass%), with respect to the solid content mass (%) of the crosslinked hydrogel polymer. As the amount of hydrogen peroxide added when hydrogen is added immediately before or during the polymerization of the monomer composition, the amount to use thereof described in the above (Embodiment 1) can be applied. Embodiment 2 may be combined, for example, with one or more of Embodiments 1, 3, and 4 other than Embodiment 2, and in this case, the amount of hydrogen peroxide added is appropriately adjusted so as to be 50 ppm or more of hydrogen peroxide with respect to the solid content mass of the crosslinked hydrogel polymer.

Similarly to (Embodiment 1), the polymerization method to be applied also in (Embodiment 2) is appropriately selected from the above methods, but it is preferable to select polymerization conditions such that the hydrogen peroxide amount in the hydrogel before the drying step is 50 ppm or more, including hydrogen peroxide to be further added after polymerization as necessary. As a specific polymerization method, one or more of "high temperature initiation polymerization", "high concentration polymerization", and "short-time polymerization" described above, further two thereof, and particularly three thereof ("high concentration polymerization" in "high temperature initiation polymerization" and "short-time polymerization" described above) are suitably applied in the present invention.

(Second method for producing water-absorbing resin)

That is, as a suitable means for achieving Embodiments 1 and 2, it is suitably applied in the present invention that a monomer composition containing 50 to 10000 ppm (more preferably 100 to 5000 ppm) of hydrogen peroxide is polymerized under the conditions of "high temperature initiation polymerization", "short-time polymerization" and "high concentration polymerization" described above, and heating exceeding 160°C is performed during the drying step and/or after the drying step.

That is, in the present invention, as the second production method, there is provided a production method for a water-absorbing resin, including a polymerization step of polymerizing a monomer composition containing an internal crosslinking agent and a monomer to obtain a crosslinked hydrogel polymer, and a drying step of drying the crosslinked hydrogel polymer to obtain a dry polymer, in which in the polymerization step, a monomer composition having a monomer concentration of 30 mass% or more and containing 50 to 10000 ppm of hydrogen peroxide with respect to the solid content mass of the monomer composition is polymerized, a temperature of the monomer composition at the time of the start of polymerization in this case is 30°C or higher, polymerization is performed at a polymerization time from the start of polymerization until a polymerization temperature reaches a maximum reaching temperature of 30 minutes or shorter (preferably 20 minutes or shorter), the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C. The production method may optionally include a gel-crushing step of crushing the crosslinked hydrogel polymer simultaneously with the polymerization step or after the polymerization step.

[2-3] Gel-crushing step

This is an optional step of crushing the crosslinked hydrogel polymer obtained in the polymerization step simultaneously with polymerization and/or after polymerization to obtain a crosslinked particulate hydrogel polymer. In order to obtain a particulate hydrogel having a predetermined particle size, this step may be performed twice or more. As in reversed-phase suspension polymerization or vapor phase polymerization, when a particulate hydrogel having an intended particle size is obtained in the polymerization step, this step may not be performed. As necessary, after the polymerization step and before the gel-crushing step, a chopping step of cutting or roughly crushing the crosslinked hydrogel polymer into a size that can be charged into a gel-crushing device may be performed by using a roller cutter, a guillotine cutter, or the like. The chopping step is preferably performed particularly in a case where belt polymerization is performed in the polymerization step to obtain a sheet-formed or block-formed hydrogel. The size of the hydrogel subjected to the gel-crushing step (preferably, obtained through the chopping step) is not particularly limited, but is preferably 10 mm or more and more preferably 3 cm or more. The upper limit is not particularly limited, but may be 3 m or less or 2 m or less.

The hydrogel to be subjected to the drying step of the next step is preferably one subjected to this step. This is because heating is efficiently performed in the drying step, and the effect of adding hydrogen peroxide is further exhibited. That is, it is preferable that the present production method includes a gel-crushing step of crushing the crosslinked hydrogel polymer obtained in the polymerization step, and the crosslinked hydrogel polymer to be subjected to the drying is a crosslinked particulate hydrogel polymer crushed in the gel-crushing step. In the gel-crushing step, an embodiment in which hydrogen peroxide is added to the crosslinked hydrogel polymer and/or crosslinked particulate hydrogel polymer is also a preferable embodiment. According to this embodiment, hydrogen peroxide can be efficiently added to the hydrogel before drying. At the time of gel-crushing, in consideration of the physical properties of the resulting water-absorbing resin, particularly the improvement of the absorption capacity without pressure, the amount of hydrogen peroxide added is preferably 50 ppm or more with respect to the solid content mass of the crosslinked hydrogel polymer.

When only a part of the acid group-containing unsaturated monomer is neutralized or the acid group-containing unsaturated monomer is not neutralized in the step of preparing a composition (2-1), and then the polymerization of (2-2) is performed, neutralization can be performed in the present gel-crushing step.

In the production method of the present invention, the type of the gel-crushing device is not particularly limited as long as a particulate hydrogel having a predetermined particle size can be obtained without impairing water absorption performance. Examples thereof include a gel-crushing device including a plurality of rotary stirring blades such as batch-type or continuous double-arm kneader, a uniaxial extruder, a biaxial extruder, a meat chopper, and the like.

In the gel-crushing step, the hydrogel may be mixed with the additive or the like and the acid group in the crosslinked polymer may be post-neutralized. The final rate of neutralization is in the above range, and sodium hydroxide, a carbonate (hydrogen) salt, or an aqueous solution or aqueous dispersion thereof is used for postneutralization after polymerization.

A surface-crosslinking agent described below may be added before the gel-crushing step and/or during the gel-crushing step. In this case, the surface crosslinking is performed simultaneously with the drying in a drying device.

A gel-fluidizing agent described below may be added before the gel-crushing step and/or during the gel-crushing step. By adding the gel-fluidizing agent, adhesion between the hydrogel particles each other in the drying step described below is suppressed, and the water absorption speed of the resulting water-absorbing resin is improved. In an embodiment in which the gel-crushing step is not required, the above effect can be obtained by adding a gel-fluidizing agent to the particulate hydrogel before the drying step. Specifically, it is preferable to add a gel-fluidizing agent at the time of preparation of a monomer composition and/or during the gel-crushing step. The amount of the gel-fluidizing agent added is preferably 0 to 1 wt% or less and more preferably 0.001 to 0.5 wt%, with respect to the solid content of the monomer or the crosslinked hydrogel polymer.

Examples of the gel-fluidizing agent include anionic, cationic, nonionic, and amphoteric surfactants, low-molecular-weight surfactants and high-molecular-weight surfactants thereof, and polymer lubricants. The gel-fluidizing agent of the present invention is preferably a surfactant.

(Surfactant)

Specific examples of the surfactant used as the gel-fluidizing agent include (1) nonionic surfactants such as sucrose fatty acid esters, polyglyceryl fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkyl allyl formaldehyde condensed polyoxyethylene ethers, polyoxyethylene polyoxypropylene block copolymers, polyoxyethylene polyoxypropyl alkyl ethers, polyethylene glycol fatty acid esters, alkyl glucosides, N-alkyl gluconamides, polyoxyethylene fatty acid amides, polyoxyethylene alkylamines, phosphoric acid esters of polyoxyethylene alkyl ethers, and phosphoric acid esters of polyoxyethylene alkyl allyl ethers, (2) amphoteric surfactants such as alkyl dimethylaminoacetic acid betaines such as caprylic dimethylaminoacetic acid betaine, lauryl dimethylaminoacetic acid betaine, myristyl dimethylaminoacetic acid betaine, and stearyl dimethylaminoacetic acid betaine, alkylamide propyl betaines such as lauric acid amide propyl betaine, coconut oil fatty acid amide propyl betaine, and palm kernel oil fatty acid amide propyl betaine, alkyl hydroxysulfobetaines such as lauryl hydroxysulfobetaine, and alkyl carboxymethyl hydroxyethyl imidazolinium betaines such as 2-alkyl-N-carboxymethyl-N-hydroxyethyl imidazolinium betaine, (3) anionic surfactants such as alkyl amino diacetic acid monoalkali metal salt such as lauryl amino diacetic acid monosodium salt, lauryl amino diacetic acid potassium, and myristyl amino sodium diacetate, and (4) cationic surfactants such as long-chain alkyl dimethylaminoethyl quaternary salts. Two or more of these may be used in combination.

(Polymer lubricant)

Specific examples of the polymer lubricant used in the gel-fluidizing agent include maleic anhydride-modified polyethylene, maleic anhydride-modified polypropylene, a maleic anhydride-modified ethylene-propylene copolymer, a maleic anhydride-modified ethylene-propylene-diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethyleneacrylic acid copolymer, ethyl cellulose, ethyl hydroxyethyl cellulose, polyalkylene oxides such as polyethylene glycol, side-chain and/or terminal polyether-modified polysiloxanes, and the like. These polymer lubricants have a molecular weight (weight average molecular weight) appropriately selected in a range of preferably 200 to 2000000, and more preferably 400 to 1000000. Two or more of these may be used in combination.

These polymer lubricants and the above-described surfactants may be also used in combination as a gel-fluidizing agent.

The kind and the amount of the gel-fluidizing agent added are appropriately adjusted in consideration of the fluidity of the particulate hydrogel, or the like in the gel-crushing step and the drying step. As Embodiment 3, when hydrogen peroxide is added to the hydrogel in this step, a mixture of hydrogen peroxide and the gel-fluidizing agent may be added, or hydrogen peroxide may be separately added to the hydrogel. As described above, the hydrogel may be crushed simultaneously with the polymerization, and in this case, Embodiments 2 and 3 are performed in parallel.

(Embodiment 3)

In Embodiment 3, hydrogen peroxide is added after the polymerization step (after completion of the polymerization step) and before the drying step, and in consideration of the effect of the present invention of reducing the load on a crushing device, hydrogen peroxide is preferably added during the gel-crushing step or before the gel-crushing step. The addition of hydrogen peroxide in the gel-crushing step is not limited to an embodiment in which the hydrogel polymer and hydrogen peroxide are added to a gel-crushing device, and also includes an embodiment in which hydrogen peroxide is added until the hydrogel polymer after the polymerization step to be gelcrushed is put into a gel-crushing device and hydrogen peroxide is mixed in the hydrogel simultaneously with the gel-crushing in the present invention. Before the gel-crushing step, hydrogen peroxide may be added in a chopping step of cutting or roughly crushing the gel into a size that can be put into a gel-crushing device. When the addition is performed in the gel-crushing step, it is preferable that hydrogen peroxide is added before the gel-crushing step and/or during the gel-crushing step, and is mixed sufficiently at the time of gel-crushing. The size of the hydrogel when hydrogen peroxide is added in the chopping step/before the gel-crushing step/during the gel-crushing step is not particularly limited, but is preferably 1 mm or more, more preferably 5 mm or more, and still more preferably 3 cm or more. It is preferable that the gel size when hydrogen peroxide is mixed is a certain value or more because the effect of adding hydrogen peroxide is more easily exhibited. The upper limit of the size of the hydrogel when hydrogen peroxide is added in the chopping step/before the gel-crushing step/during the gel-crushing step is not particularly limited, but may be 3 m or less or 2 m or less. The amount of hydrogen peroxide added to the hydrogel polymer is appropriately set in consideration of the amount of hydrogen peroxide remaining before drying, but, for example, the amount of hydrogen peroxide added is preferably 50 ppm (0.005 mass%) or more, more preferably 50 ppm (0.005 mass%) to 10000 ppm (1.0 mass%), and still more preferably 100 ppm (0.01 mass%) to 5000 ppm (0.5 mass%), with respect to the solid content mass of the crosslinked hydrogel polymer. The addition method of (Embodiment 3) can be selected as the method (2) for adjusting content of hydrogen peroxide in the crosslinked hydrogel polymer after polymerization step. Embodiment 3 may be combined, for example, with one or more of Embodiments 1, 2, and 4 other than Embodiment 3, and in this case, the amount of hydrogen peroxide added is appropriately adjusted so as to be 50 ppm or more of hydrogen peroxide with respect to the solid content mass of the crosslinked hydrogel polymer. A preferred embodiment of the present invention further includes a gel-crushing step of crushing the crosslinked hydrogel polymer simultaneously with the polymerization step or after the polymerization step, and in the gel-crushing step, 50 to 10000 ppm of hydrogen peroxide with respect to the solid content mass of the crosslinked hydrogel polymer is added.

The residual amount of hydrogen peroxide after addition is not determined only by the addition amount thereof, but is affected by the temperature and rate of polymerization of the crosslinked hydrogel polymer, the time until the drying step, and the like, and thus the hydrogen peroxide amount (ppm) in the crosslinked hydrogel polymer before drying may be measured as necessary to control these conditions.

The rate of polymerization of the particulate hydrogel in the present invention is preferably 90 mass% or more, more preferably 95 mass% or more, and still more preferably 98 mass% or more, from the viewpoint of suppressing aggregation of the crosslinked particulate hydrogel polymer during drying and reducing the monomer residue in the resulting water-absorbing resin. When the drying step is performed using a hydrogel containing a large amount of unreacted monomers and having a low rate of polymerization, hydrogen peroxide may be consumed before the drying step, or a polymerization reaction may proceed during the drying to regenerate or by-produce gel particles having a large particle size from gel particles having a small particle size. Gel particles having a large particle size cause problems such as a decrease in the water absorption speed of the resulting the water-absorbing resin, an increase in the size of the dried product, and generation of fine powder by re-pulverizing to a desired product particle. In order to avoid this problem, the rate of polymerization of the hydrogel is preferably in the above range.

The upper limit of the rate of polymerization of the (particulate) hydrogel is not particularly limited, and is ideally 100 mass%. However, a high rate of polymerization requires a long polymerization time and strict polymerization conditions that may lead to deterioration of the productivity and the physical properties. Therefore, the upper limit may be 99.95 mass% or 99.9 mass%, and usually an upper limit of about 99.8 mass% is sufficient. Typically, the rate of polymerization is 98 to 99.99 mass%.

The rate of polymerization of the hydrogel can be measured as follows. After sampling the hydrogel, immediately 1.00 g of the hydrogel is put into 1000 g of ion-exchanged water at room temperature (at this point, the polymerization reaction substantially is stopped), and the mixture is stirred at 300 rpm for 2 hours and then filtered to remove an insoluble matter. The amount of the monomer extracted into the filtrate obtained by the above operation is measured using a liquid chromatograph. When the amount of the monomer is regarded as the residual monomer amount m (g), the rate of polymerization of the hydrogel C (mass%) is determined in accordance with the following (Formula 1), and the residual monomer ratio of the hydrogel R (mass%) is determined in accordance with the following (Formula 2). The rate of polymerization is preferably measured immediately after sampling the hydrogel, and in a case where a long time is required from sampling to measurement, operation of stopping polymerization by forced cooling (for example, contact with dry ice, liquid nitrogen, or ice water) is necessary.

$$C \text{ (mass\%)} = 100 \times \{1 - m/(\alpha \times M/100)\} \quad \dots \text{(Formula 1)}$$

$$R \text{ (mass\%)} = 100 - C \quad \dots \text{(Formula 2)}$$

In (Formula 1), M represents the mass (g) of the hydrogel, and $\alpha$ represents the solid content ratio (mass%) of the hydrogel. In (Formula 2), C represents the rate of polymerization (mass%) of the hydrogel.

In order to solve the problems of the present invention, the upper limit of the CRC (centrifuge retention capacity) of the (particulate) hydrogel is preferably 80 g/g or less, more preferably 50 g/g or less, still more preferably 45 g/g or less, and particularly preferably 40 g/g or less, in terms of solid content. The lower limit is preferably 5 g/g or more, more preferably 10 g/g or more, still more preferably 15 g/g or more, and particularly preferably 20 g/g or more. A suitable range is 5 g/g to 80 g/g, more preferably 10 g/g to 50 g/g, still more preferably 15 g/g to 45 g/g, and particularly preferably 20 g/g to 40 g/g. From the viewpoint of suppressing adhesion to a device, in a preferred embodiment, the CRC (centrifuge retention capacity) of the (particulate) hydrogel is 43 g/g or less, and may be 40 g/g or less or 38 g/g or less. The solid content conversion refers to physical properties obtained by measuring various physical properties such as CRC in the hydrogel and then converting the physical properties into the physical properties per solids content of the water-absorbing resin in the hydrogel (for example, in the case of a hydrogel having a moisture content of 50% (solid content: 50%), converted into the physical property measurement value in the hydrogel $\times$ 2 times). Specifically, the CRC (centrifuge retention capacity) of the (particulate) hydrogel is measured by the method described in Examples below.

In the present invention, the solid content ratio of the (particulate) hydrogel (hereinafter, gel solid content ratio) is preferably 25 mass% or more. The gel solid content ratio is more preferably 25 mass% to 75 mass%, still more preferably 25 mass% to 65 mass%, even still more preferably 25 mass% or more and less than 60 mass%, and particularly preferably 40 mass% or more and less than 60 mass%, from the viewpoint of suppression of aggregation between hydrogel particles after gel-crushing, the energy required for crushing, the drying efficiency, and the absorption performance. When the gel solid content is high, the effect of hydrogen peroxide may be less likely to be exhibited. The gel solid content ratio is measured by the method described in Examples below.

In the present invention, as a preferable particle size of the (particulate) hydrogel, the mass average particle size of the crosslinked particulate hydrogel polymer in terms of solid content is within a range of 5000 um or less, and is preferably 3000 um or less and 1000 um or less in this order. In the present embodiment, since the adhesion of the hydrogel to a device is reduced, the load on the device is small, and the particle size of the particulate hydrogel can be reduced. The lower limit of the particle size of the (particulate) hydrogel is, for example, 50 um or more as the mass average particle size in terms of solid content. The mass average particle size in terms of solid content can be measured by the method described in the following Examples. In the gel-crushing step, as the method of controlling the mass average particle size within the above range, methods of U.S. Patent Nos. 6906159, 5275773, 6100305, 6140395, and 6875511, US 2004/234607 A, US 2005/46069 A, and the like are adopted. The load on the device at the time of gel-crushing can be evaluated by GGE(1) and GGE(2) described in WO 2011/126079 A (US 2013/026412 A), and the magnitudes of the current value (A) during operation of gel-crushing device.

In the present production method (first production method), the content of hydrogen peroxide in the crosslinked hydrogel polymer to be subjected to drying is 50 ppm or more with respect to the solid content mass of the hydrogel. When the content of hydrogen peroxide is 50 ppm or more, the absorption capacity without pressure (CRC) of the resulting water-absorbing resin is remarkably improved. As an example of a means for adjusting the content of hydrogen peroxide, hydrogen peroxide is added in the monomer composition and the specific polymerization is performed such as the high temperature initiation/high concentration/short-time polymerization (second production method) or in the gel-crushing step (third production method). Most (70% or more) of the hydrogen peroxide remains in the crosslinked hydrogel polymer after added in an amount of 50 ppm or more by the second or third method, and thus the second or third method are suitably applied in a method (first production method) in which the content of the hydrogen peroxide is set to 50 ppm or more with respect to the solid content mass of the hydrogel.

When the hydrogen peroxide amount is controlled by the second production method and the third production method, in order to control the hydrogen peroxide amount in the crosslinked hydrogel polymer, the time from the polymerization step to the drying step and/or the time from the gel-crushing step to the drying step is preferably as short as possible, and is preferably 1 hour or shorter, more preferably 30 minutes or shorter, more preferably 20 minutes or shorter, 10 minutes or shorter, and 5 minutes or shorter in this order, and the temperature of the crosslinked hydrogel polymer during this time is preferably controlled to 100°C or lower, more preferably 90 to 30°C or 80 to 40°C. The time from the polymerization step to the drying step and/or the time from the gel-crushing step to the drying step is usually 30 seconds or longer.

Preferably, in the first to third production methods, the content (or the amount to use) of hydrogen peroxide in the hydrogel to be subjected to drying is more than 100 ppm, more preferably 150 ppm, and still more preferably 200 ppm or more, from the viewpoint of improving the absorption capacity without pressure. The content (in terms of solid content) of hydrogen peroxide in the hydrogel to be subjected to drying is preferably 50,000 ppm or less, more preferably 10,000 ppm or less, and still more preferably 5000 ppm or less or 3000 ppm or less, from the viewpoint of suppressing an excessive increase in the soluble content.

[2-4] Drying step

This is a step of drying the (particulate) hydrogel obtained in the polymerization step and/or the gel-crushing step to desired solids content of the resin to obtain a dry polymer. The solids content of the resin are determined from an amount lost from drying (a change in mass when 1 g of the water-absorbing resin is heated at 180°C for 3 hours), and are preferably 80 mass% or more, more preferably 85 to 99 mass%, still more preferably more than 90 mass% and 99 mass% or less, even more preferably more than 90 mass% and 98 mass% or less, and particularly preferably 92 to 97 mass%.

The method of drying the particulate hydrogel is not particularly limited, and examples thereof include heat drying, hot gas drying, drying under reduced pressure, fluidized-bed drying, infrared drying, microwave drying, drum dryer drying, drying by azeotropic dehydration with a hydrophobic organic solvent, high humidity drying by use of high temperature water vapor, and the like. Among them, hot gas drying is preferable from the viewpoint of drying efficiency.

The set temperature of the dryer used at the time of drying is higher than 160°C, higher than 160°C and 250°C or lower, 170 to 220°C, 170 to 200°C, 180 to 200°C, or higher than 180°C and 200°C or lower in this order of preference. By controlling the set temperature in this manner, the maximum reaching temperature of the crosslinked hydrogel polymer during the drying step is easily set to a desired temperature, and deterioration of the water-absorbing resin is suppressed. That is, in a preferred embodiment of the present invention, the crosslinked hydrogel polymer is dried in a dryer set at a temperature exceeding 160°C.

Examples of the hot gas drying method include a method of drying in a static state, a method of drying in a stirred state, a method of drying in a vibrating state, a method of drying in a flowing state, a method of drying by an air flow, and the like. Among these, from the viewpoint of efficiency, stirring drying or static drying is preferable, stirring drying using a rotary device or ventilation band drying is more preferable, and hot gas drying using continuous static drying (continuous ventilation band drying) is particularly preferable. In the case of performing the hot gas drying, the hot gas temperature is higher than 160°C, higher than 160°C and 250°C or lower, 170 to 220°C, 170 to 200°C, 180 to 200°C, or higher than 180°C and 200°C or lower in this order of preference. By controlling the hot gas temperature in this manner, the maximum reaching temperature of the temperature of the crosslinked hydrogel polymer during the drying step is easily set to a desired temperature, and deterioration of the water-absorbing resin is suppressed.

As another suitable embodiment, stirring drying using a stirring type drying device is adopted. This stirring drying is one type of drying operation by conductive heat transfer, and the object to be dried can be dried preferably continuously using an indirect heating method. Therefore, there is an advantage that drying efficiency is high. The stirring method and form of the stirring type drying device are not particularly limited, and any form may be used as long as the contents in the drying device are stirred by a stirring blade such as an arm, a blade, or a paddle, or a stirring means such as a rotating cylinder. That is, examples of the stirring type drying device include a container rotary dryer in which a container itself that stores contents rotates, vibrates, and swings; a mechanical stirring dryer that stirs contents with a rotating shaft including a stirring blade such as an arm, a blade, or a paddle; a floating stirring type dryer that floats contents with gas such as air; a flow path division type dryer that divides flow path by gravity, branch plate, and the like; a high-speed shear type dryer; an impact type dryer; and the like. Among them, it is preferable to use a container rotary dryer from the viewpoint of less mechanical damage. For a description of a specific device or the like, WO 2018/092863 A and WO 2018/092864 A can be referred to. In the case of using the drying device of the indirect heating type as described above, the object to be dried may be heated by heating a jacket, a heating tube, or the like provided in the drying device with a heat medium, and the temperature of the heat medium is higher than 160°C, higher than 160°C and 250°C or lower, 170 to 220°C, 170 to 200°C, 180 to 200°C, or higher than 180°C and 200°C or lower in this order of preference.

In the present invention, during or after the drying step, heating is performed so that the maximum reaching temperature of the crosslinked hydrogel polymer or the dry polymer (hereinafter, also simply referred to as the maximum reaching temperature) exceeds 160°C.

In one embodiment, in the drying step, the maximum reaching temperature of the crosslinked hydrogel polymer is a temperature exceeding 160°C (Embodiment A). When the maximum reaching temperature of the crosslinked hydrogel polymer is 160°C or lower in the drying step, the absorption capacity without pressure of the resulting water-absorbing resin is low. As a result, in order to obtain a water-absorbing resin having a high absorption capacity without pressure, it is necessary to reduce the amount of the internal crosslinking agent used, which causes problems such as adhesion of the hydrogel to a device. The maximum reaching temperature of the water-absorbing resin during drying is preferably higher than 160°C and 250°C or lower, more preferably 170 to 220°C, and most preferably 170 to 200°C, 180 to 200°C, or higher than 180°C and 200°C or lower. When the heat medium temperature or the maximum reaching temperature is 250°C or lower, deterioration of the water-absorbing resin during drying is prevented. The maximum reaching temperature of the water-absorbing resin during drying is measured by a contact thermometer installed in a drying device. Examples of the contact thermometer include a thermocouple, a platinum thermometer or a bimetal thermometer, and particularly a thermocouple (for example, a K-line sheathed thermocouple). Typically, the drying temperature is measured at the central portion (for example, a position of about 5 cm when the thickness of the material is 10 cm) of the material layer (the particulate hydrogel or granular dried product).

The drying conditions other than the drying temperature, such as the wind speed of the hot gas and the drying time, may be appropriately set according to the moisture content and total weight of the (particulate) hydrogel subjected to drying and intended solids content of the resin, and when band drying is performed, various conditions described in WO 2006/100300 A, WO 2011/025012 A, WO 2011/025013 A, WO 2011/111657 A, and the like are appropriately applied.

The drying time is, for example, preferably 10 to 120 minutes and more preferably 20 to 60 minutes, from the viewpoint of the fluid retention capacity (CRC) and the monomer residue.

[2-5] Pulverizing step and classification step

This is a step of pulverizing the dry polymer obtained in the drying step (pulverizing step) and adjusting the particle size to a predetermined range (classification step) to obtain a water-absorbing resin powder (a powdery water-absorbing resin before surface crosslinking is also referred to as "water-absorbing resin powder" for convenience).

Examples of the device (pulverizer) used in the pulverizing step include high-speed rotary pulverizers such as roll mills, hammer mills, screw mills, and pin mills, vibrating mills, knuckle pulverizers, cylindrical mixers, and the like, and these devices are used in combination as necessary. The pulverizing step is different from the gel-crushing step described above in that the dry polymer to be pulverized is subjected to the drying step.

The method for adjusting the particle size in the classification step is not particularly limited, and examples thereof include sieve classification and air flow classification using JIS standard sieves (JIS Z8801-1 (2000)). The particle size adjustment of the water-absorbing resin is not limited to the pulverizing step and the classification step, and can be appropriately performed in the polymerization step (particularly, reversed-phase suspension polymerization or spray and droplet polymerization) and other steps. It is also possible to remove irregular products (for example, fine powder) classified in the classification step, and the irregular products may be recycled during the production process by, for example, granulating or the like.

The particle size of the water-absorbing resin powder obtained in the above step (the water-absorbing resin powder before the surface crosslinking step, a so-called base polymer or the water-absorbing resin powder after optionally performed surface crosslinking or addition of additives, particularly, the water-absorbing resin powder as a final product) is preferably 200 to 600 $\mu$m, more preferably 200 to 550 $\mu$m, and still more preferably 250 to 500 $\mu$m, as the mass average particle size (D50). The proportion of particles having a particle size of 45 um or more and less than 150 um (particles passing through a sieve having a mesh opening 150 um but not passing through a sieve having a mesh opening of 45 um in JIS standard sieves (JIS Z8801-1(2000)) is preferably 10 mass% or less, more preferably 5 mass% or less, and still more preferably 3 mass% or less. The proportion of particles having a particle size of 850 um or more (particles not passing through a sieve having a mesh opening of 850 um in JIS standard sieves (JIS Z8801-1(2000)) is preferably 5 mass% or less, more preferably 3 mass% or less, and still more preferably 1 mass% or less. The lower limit value of the proportion of these particles is preferably as small as possible in any case, and is desirably 0 mass%, but may be about 0.1 mass%. The logarithmic standard deviation ($\sigma\zeta$) of the particle size distribution is preferably 0.20 to 0.50, more preferably 0.25 to 0.40, and still more preferably 0.27 to 0.35. These particle sizes are measured using a standard sieve according to the measurement method disclosed in U.S. Patent No. 7638570 and NWSP 220.0.R2(15).

The particle size described above is applied not only to the water-absorbing resin after surface crosslinking (hereinafter, referred to as "water-absorbing resin particles" for convenience in some cases) but also to a water-absorbing agent as a final product. Therefore, in the water-absorbing resin particles, it is preferable to perform a surface crosslinking treatment (surface crosslinking step) so as to maintain the particle size in the above range, and it is more preferable to adjust the particle size by providing a sizing step (pulverizing and classification step) after the surface crosslinking step.

[2-6] Surface crosslinking step

This is a step of providing a portion having a higher crosslinking density on the surface layer (portion of several 10 um from the surface of the water-absorbing resin powder) of the water-absorbing resin powder, and includes a mixing step, a heat treatment step, and a cooling step (optional).

In the surface crosslinking step, a surface-crosslinked water-absorbing resin (water-absorbing resin particles) is obtained by radical crosslinking, surface polymerization on the surface of the water-absorbing resin powder, or a crosslinking reaction with a surface-crosslinking agent, or the like. From the viewpoint of water absorption performance such as fluid retention capacity under load, it is preferable to perform surface crosslinking. The surface crosslinking step may be performed simultaneously with the drying step of [2-4] with reference to the description of WO 2018/092863 A, WO 2014/038324 A, and the like.

[2-6-1: Mixing step]

This is a step of mixing the water-absorbing resin powder or the crosslinked hydrogel polymer with a surface-crosslinking agent. The method of mixing the surface-crosslinking agent is not particularly limited, and examples thereof include a method in which a surface-crosslinking agent solution is prepared in advance, and the solution is preferably sprayed or added dropwise onto the water-absorbing resin powder or the crosslinked hydrogel polymer and more preferably sprayed and mixed.

The surface-crosslinking agent is not particularly limited, and examples thereof include organic or inorganic surface-crosslinking agents. Among them, from the viewpoint of the physical properties of the water-absorbing resin and the handleability of the surface-crosslinking agent, an organic surface-crosslinking agent reacting with a carboxyl group is preferable. For example, one or two or more surface-crosslinking agents disclosed in U.S. Patent No. 7183456 are included. More specific examples thereof include polyhydric alcohol compounds, epoxy compounds, haloepoxy compounds, polyamine compounds or condensates thereof with haloepoxy compounds, oxazoline compounds, oxazolidinone compounds, polyvalent metal salts, alkylene carbonate compounds, cyclic urea compounds, and the like.

Specific examples of the organic surface-crosslinking agent include polyalcohol compounds such as (di-, tri-, tetra-, or poly-)ethylene glycol, (di- or poly-)propylene glycol, 1,3-propanediol, 2,2,4-trimethyl-1,3-pentanediol, (poly)glycerin, 2-butene-1,4-diol, 1,4-butanediol, 1,3-butanediol, 1,5-pentanediol, 1,6-hexanediol, trimethylolpropane, di- or tri-ethanolamine, pentaerythritol, and sorbitol; epoxy compounds such as (poly)ethylene glycol diglycidyl ether, (di- or poly-)glycerol polyglycidyl ether, and glycidol; oxazoline compounds such as 2-oxazolidone, N-hydroxyethyl-2-oxazolidone, and 1,2-ethylene bisoxazoline; alkylene carbonate compounds such as 1,3-dioxolan-2-one (ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxane-2-one, 4-methyl-1,3-dioxane-2-one, 4,6-dimethyl-1,3-dioxane-2-one, and 1,3-dioxopan-2-one; and the like.

In addition to the organic surface-crosslinking agent, a polyvalent cationic polymer such as a polyamine polymer or a water-soluble polyvalent metal cation-containing compound may be used as an ion-bonding surface-crosslinking agent in combination.

The amount of the surface-crosslinking agent used (total amount used in the case of using a plurality of surface-crosslinking agents) is preferably 0.01 to 10 parts by mass and more preferably 0.01 to 5 parts by mass, with respect to 100 parts by mass of the water-absorbing resin powder or crosslinked hydrogel polymer (solid content). The surface-crosslinking agent is preferably added as an aqueous solution, and in this case, the amount of water used is preferably 0.1 to 20 parts by mass and more preferably 0.5 to 10 parts by mass, with respect to 100 parts by mass of the water-absorbing resin powder or the crosslinked hydrogel polymer (solid content). In the case of using a hydrophilic organic solvent as necessary, the amount of the hydrophilic organic solvent used is preferably 10 parts by mass or less and more preferably 5 parts by mass or less, with respect to 100 parts by mass of the water-absorbing resin powder or the crosslinked hydrogel polymer (solid content).

As described above, in the surface crosslinking step, a water-soluble polyvalent metal cation-containing compound may be added.

[2-6-2: Heat treatment step]

This is a step of applying heat to the mixture obtained by the mixing step to cause a crosslinking reaction on the surface of the water-absorbing resin powder. This step may be performed simultaneously with the drying step, or may be performed after the drying step.

The device for performing the crosslinking reaction is not particularly limited. In the case of performing the crosslinking reaction in the drying step, the device for performing the crosslinking reaction is the drying device, and in the case of subjecting the water-absorbing resin powder after drying to a heat treatment, a paddle dryer is preferably mentioned. The reaction temperature in the crosslinking reaction is appropriately set according to the type of the surface-crosslinking agent to be used, and is preferably 50 to 300°C and more preferably 100 to 200°C.

In the present invention, as described above, during or after the drying step, heating is performed so that the maximum reaching temperature of the crosslinked hydrogel polymer or the dry polymer exceeds 160°C. When the maximum reaching temperature of the crosslinked hydrogel polymer does not exceed 160°C during the drying step, heating may be performed so that the maximum reaching temperature of the dry polymer exceeds 160°C in the present heat treatment step or the subsequent step (Embodiment B). In a preferred embodiment, in the surface crosslinking step after the drying step, the dry polymer is heated so that the maximum reaching temperature of the dry polymer exceeds 160°C. When the drying temperature is 160°C or lower, the absorption capacity without pressure of the resulting water-absorbing resin is low. As a result, in order to obtain a water-absorbing resin having a high absorption capacity without pressure, it is necessary to reduce the amount of the internal crosslinking agent used, which causes problems such as adhesion of the hydrogel to a device. The maximum reaching temperature is preferably higher than 160°C and 250°C or lower, more preferably 170 to 220°C, still more preferably 170 to 200°C, 180 to 200°C, and most preferably higher than 180°C and 200°C or lower. The maximum reaching temperature is measured by a contact thermometer installed in a heating device performing heating. Examples of the contact thermometer include a thermocouple, a platinum thermometer or a bimetal thermometer, and particularly a thermocouple (for example, a K-line sheathed thermocouple).

[2-6-3: Cooling step]

This is an optional step performed as necessary after the heat treatment step.

The device for performing the cooling is not particularly limited, but is preferably a device having the same specification as the device used in the heat treatment step, and more preferably a paddle dryer. This is because the paddle dryer can be used as a cooling device by changing the heat medium to a refrigerant. The water-absorbing resin particles obtained in the heat treatment step are forcibly cooled to preferably 40 to 80°C and more preferably 50 to 70°C as necessary in the cooling step.

[2-7] Sizing step

This is a step of adjusting the particle size of the surface-crosslinked (particulate) dry polymer. By performing the sizing step after the surface crosslinking step, a water-absorbing resin powder in which the particle size or particle size distribution is controlled at a high level is obtained.

The sizing step preferably includes a pulverizing step and/or a classification step. The pulverizing step and the classification step are the same as those described in the sections of the drying step and the classification step.

From the viewpoint of water absorption performance, the particle size of the water-absorbing resin powder obtained through the sizing step is in the above range.

[2-8] Step of adding other additives

This is an optional step performed for the purpose of imparting various additional functions to the water-absorbing resin and improving the water absorption performance.

Examples of the other additives include a chelating agent, an organic reducing agent, inorganic fine particles, a polyvalent metal salt, an inorganic reducing agent, an oxidizing agent, a hydroxycarboxylic acid compound, a surfactant, a compound having a phosphorus atom, an organic powder such as metal soap, a deodorant, an antibacterial agent, pulp, thermoplastic fibers, and the like. Examples of the water absorption performance imparted to the water-absorbing resin include liquid permeability, examples of the additive for improving the liquid permeability include the following polyvalent metal salt, cationic polymer, and inorganic fine particles, and use of at least one of these is preferable. The amount to add thereof is preferably less than 2.0 parts by mass, more preferably less than 1.5 parts by mass, and still more preferably less than 1.0 part by mass, with respect to 100 parts by mass of the water-absorbing resin powder.

[2-9] Other steps

The production method according to the present invention may further include a cooling step, a re-moistening step, a pulverizing step, a classification step, a fine powder granulating step, a transporting step, a storing step, a packaging step, a reserving step, and the like as necessary, in addition to the above-described steps.

Hydrogen peroxide may be added in the fine powder granulating step (Embodiment 4), and the amount of hydrogen peroxide added is preferably 50 ppm (0.005 mass%) to 10000 ppm (1.0 mass%), and more preferably 100 ppm (0.01 mass%) to 5000 ppm (0.5 mass%), with respect to the solid content mass of the crosslinked hydrogel polymer. Embodiment 4 may be combined with any one or more of Embodiments 1 to 3, and it is more preferable to perform Embodiment 4 in combination with any one or more of Embodiments 1 to 3. As a result, the CRC of the resulting water-absorbing resin can be sufficiently increased. In this case, the amount of hydrogen peroxide added is appropriately adjusted so as to be 50 ppm or more of hydrogen peroxide with respect to the solid content mass of the crosslinked hydrogel polymer.

In the fine powder granulating step, the fine powder classified in the production process or the fine powder obtained in the above-described sizing step is granulated. The granulated product obtained in this step is preferably recycled during the production process.

Granulation means that particles are attached to each other by a physical or chemical method to form particles larger than the original particles.

The granulation is preferably performed by granulating with a solvent such as water or a hydrophilic solvent. Examples of the solvent include water; alcohols such as methyl alcohol, ethyl alcohol, n-propyl alcohol, isopropyl alcohol, n-butyl alcohol, isobutyl alcohol, and t-butyl alcohol; and combinations thereof. The solvent is preferably water. The amount of the solvent is usually in a range of 25 to 250 parts by mass, preferably 25 to 200 parts by mass, with respect to 100 parts by mass of the solid content of the water-absorbing resin, although depending on the moisture content of the fine powder to be used.

The device used when the solvent and the fine powder are mixed is also not particularly limited. For example, in the case of a container fixed mixer, a mechanical stirring mixer is preferable. Specific examples thereof include a turbulizer (manufactured by HOSOKAWA MICRON CORPORATION), a Loedige mixer (manufactured by Loedige), a mortar mixer (manufactured by Nishinihonshikenki), and the like. In the mixing, either a batch-type mixer or a continuous mixer may be used.

The heating temperature in the mixing device, preferably the inner wall surface and/or the stirring means of the mixing device, during mixing is preferably 60°C or higher, more preferably 65°C or higher, and still more preferably 70°C or higher, and is preferably 120°C or lower, more preferably 100°C or lower, and still more preferably 90°C or lower. By heating a mixer device (preferably, either the inner wall surface or a stirring means, more preferably, both of them), the fine powder can be uniformly granulated in a short time, and the productivity is improved. The temperature in the mixing device can be appropriately adjusted by, for example, supplying of heated gas, conducting heat transfer, or the like.

In the case of adding the hydrogen peroxide in this step, the method of adding hydrogen peroxide is not particularly limited, but from the viewpoint of ease of addition, hydrogen peroxide is preferably added in a state of being dissolved in an aqueous solution using water as the solvent. The granulated product added with hydrogen peroxide obtained in this step is preferably recycled during the production processes, and preferably heated to exceeding 160°C after the addition. Specifically, the granulated product added with hydrogen peroxide can be added in steps such as the step of preparing a monomer composition; the polymerization step (for example, embodiment of addition during polymerization or to gel after polymerization or adding in the crushing step); the gel-crushing step; the drying step; and the mixing step of a surface-crosslinking agent. The water-absorbing resin granulated product may be suitably dried and pulverized, but it is preferable to recycle the water-absorbing resin granulated product as a granulated product (granulated gel) mixed with an aqueous liquid (preferably water).

[3. Physical properties of resulting water-absorbing resin]

The present invention also provides a water-absorbing resin obtained by the production method of the above embodiment. The physical properties of the water-absorbing resin are preferably as follows. The following physical property values can also be applied as a suitable range as the water-absorbing agent (water-absorbing resin composition that may contain the water-absorbing resin and other components).

[3-1] CRC (absorption capacity without pressure, centrifuge retention capacity)

"CRC" is an abbreviation for "centrifuge retention capacity", and means a fluid retention capacity without pressure (also referred to also as "fluid retention capacity") of a water-absorbing resin.

The CRC of the water-absorbing resin is usually 5 g/g or more, preferably 15 g/g or more, more preferably 25 g/g or more, 30 g/g or more, 35 g/g or more, or 40 g/g or more, and still more preferably 45 g/g or more, or 50 g/g or more. The upper limit value is not particularly limited and a higher CRC is preferable, but from the viewpoint of balance with other physical properties, the upper limit is preferably 70 g/g or less and more preferably 65 g/g or less. The present invention can be suitably applied to the production of a water-absorbing resin having a high fluid retention capacity, and having a fluid retention capacity (CRC) before surface crosslinking of 30 g/g or more, 35 g/g or more, or 40 g/g or more, and a high fluid retention capacity of 45 g/g or more, 50 g/g or more, or 55 g/g or more, and a water-absorbing resin having a high fluid retention capacity, which has been conventionally difficult to produce due to the adhesiveness of the hydrogel, can be easily produced.

A water-absorbing resin powder having a CRC of less than 5 g/g absorbs a small amount of liquid, and thus is not suitable as an absorbent body of an absorbent article such as a disposable diaper. A water-absorbing resin powder having a CRC of more than 70 g/g absorbs a body fluid such as urine or blood at a reduced speed, and therefore is not suitable for use in disposable diapers and the like having a high water absorption speed. According to the present production method, a water-absorbing resin having a high CRC can be obtained.

In the present invention, the CRC of the water-absorbing resin is preferably larger than the CRC of the (particulate) hydrogel from the viewpoint of reduction of adhesion to a polymerization device or the like, reduction of a load on a pulverizing device, or water absorption characteristics. Specifically, the CRC (g/g) of the water-absorbing resin - the CRC (g/g) of the (particulate) hydrogel is 5 g/g or more, 8 g/g or more, 10 g/g or more, 15 g/g or more, or 17 g/g or more in this order of preference. The upper limit of the CRC (g/g) of the water-absorbing resin - the CRC (g/g) of the (particulate) hydrogel is, for example, 30 g/g or less.

[3-2] AAP (absorption capacity under load)

The water-absorbing resin preferably has an AAP (absorption capacity under load) of 15 g/g or more, more preferably 20 g/g or more, still more preferably 23 g/g or more, particularly preferably 24 g/g or more, and most preferably 25 g/g or more. The upper limit value is not particularly limited, but is preferably 40 g/g or less.

[3-3] Residual amount of hydrogen peroxide

The residual amount of hydrogen peroxide in the water-absorbing resin is preferably 10 ppm or less, more preferably 1 ppm or less, and most preferably 0 ppm (value below the detection limit). When the residual amount of the added hydrogen peroxide is the upper limit or less, the influence on the water absorption characteristics of the water-absorbing resin is small, and the safety is excellent.

[4] Use of water-absorbing resin

The use of the water-absorbing resin is not particularly limited, but is preferably for an absorbent body of an absorbent article such as a disposable diaper (for infants or adults), a sanitary napkin, or an incontinence pad. The water-absorbing resin powder (water-absorbing agent) can be particularly used in an absorbent body of a high-concentration disposable diaper. Examples of other absorbent articles include drip absorbent materials, freshness keeping materials, portable toilets for disaster, pet sheets, cat sand, and the like. Examples of other use applications of the water-absorbing resin include a soil humectant, a seedling growing sheet, a seed coating material, an anti-condensation sheet, a disposable warmer, a cooling bandana, a refrigerant, a medical waste liquid solidifying agent, a residual soil solidifying agent, a gelling agent for water loss prevention waste liquid, an absorbent soil, a poultice material, a cosmetic thickener, a water sealant for electric and electronic material communication cables, a gasket packing, a sustained release agent for fertilizers, various sustained release agents (such as a space sterilizing agent and fragrance), a wound protection dressing material, a building material for preventing dew condensation, a moisture-removing agent in oil, a paint, an adhesive, an anti-blocking agent, a light diffuser, a matting agent, an additive for cosmetic plates, an additive for artificial marble, an additive for resins such as an additive for toner, and the like.

As a raw material of the absorbent body, an absorbent material such as a pulp fiber can be used together with the water-absorbing resin. In this case, the content (core concentration) of the water-absorbing resin in the absorbent body is preferably 30 mass% to 100 mass%, more preferably 40 mass% to 100 mass%, still more preferably 50 mass% to 100 mass%, still even more preferably 60 mass% to 100 mass%, particularly preferably 70 mass% to 100 mass%, and most preferably 75 mass% to 95 mass%.

In the case of using the absorbent body in the upper layer part of the absorbent article, the absorbent article can be maintained in a white state with a clean feeling by setting the core concentration in the above range. Furthermore, the absorbent body is excellent in diffusibility of a body fluid and the like such as urine or blood and therefore enables efficient liquid distribution, and thus improvement in the amount of liquid absorbed can be expected.

[3-5] Comparison with conventional technologies

As disclosed in Patent Literatures 8, 13, 14, and the like, the use of hydrogen peroxide as a polymerization initiator is also known, but for example, Patent Literature 8 (reversed-phase suspension polymerization for a long time) and Patent Literatures 13 and 14 (redox polymerization for a long time) do not suggest the production method of the present application using the hydrogen peroxide having a specific lower limit of residual amount in the polymer after polymerization and heating exceeding 160°C and the problem/effect of the present application .

Examples

The present invention will be described more specifically with reference to the following Experimental Examples, but the present invention is not to be construed as being limited to these descriptions, and experimental examples obtained by appropriately combining the technical means disclosed in Experimental Examples are also included in the scope of the present invention.

The term "water-absorbing resin" described below means a granular dried product obtained through the drying step and a surface-crosslinked granular dried product, or a water-absorbing resin powder and a surface-crosslinked water-absorbing resin powder, and the term "hydrogel" means a crosslinked hydrogel polymer or a crosslinked particulate hydrogel polymer not having undergone the drying step.

In the electric devices (including devices used to measure physical properties of a water-absorbing resin) used in Experimental Examples, a 200-V or 100-V electric power supply was used at 60 Hz, unless otherwise specified. The physical properties of the water-absorbing resins and the hydrogels described below were measured under the conditions of room temperature (20°C to 25°C) and a relative humidity of 50% RH $\pm$ 10%, unless otherwise specified.

For convenience, the expression "1" or "L" may be used to mean "liter", and the expression "wt%" may be used to mean "% by mass" or "% by weight". In the case of performing measurement of a trace component, the expression "N.D. (non detected)" may be used to mean a value below the detection limit.

[Example 1] Addition of hydrogen peroxide to polymerization step of high concentration/high temperature initiation/short-time polymerization (first and second methods of present invention)

Into a polypropylene container having a capacity of 2 L, 422.0 g (5.86 mol) of acrylic acid, 11.94 g (0.039 mol% with respect to the monomer) of a 10 mass% aqueous polyethylene glycol diacrylate solution (molecular weight: 523) as an internal crosslinking agent, 1.29 g (0.00096 mol% with respect to the monomer) of a 2.0 mass% aqueous trisodium diethylenetriaminepentaacetate (DTPA·3Na) solution, 173.9 g of a 48.5 mass% aqueous sodium hydroxide solution, and 394.6 g of deionized water (ion-exchanged water) were put and mixed to prepare a monomer composition (a1).

Next, the monomer composition (a1) was cooled under stirring. When the liquid temperature reached 42°C, 178.7 g of a 48.5 mass% aqueous sodium hydroxide solution adjusted to a temperature of 40°C was added and mixed to prepare a monomer composition (a2) (rate of neutralization of acrylic acid: 73 mol%). At this time, the temperature of the monomer composition (a2) was raised to 78.0°C by the heat of the second stage neutralization immediately after preparation. Immediately after the 48.5 mass% aqueous sodium hydroxide solution was started to be mixed, a precipitate was observed but the precipitate was gradually dissolved, and thus a transparent homogeneous solution was obtained.

Next, 1.0 g (100 ppm of hydrogen peroxide with respect to the solid content in the monomer composition (the total amount of the monomer, acrylic acid, and sodium acrylate)) of a 5.0 mass% aqueous hydrogen peroxide solution and 16.5 g (0.053 mol% with respect to the monomer) of a 4.5 mass% aqueous sodium persulfate solution were added to the monomer composition (a2) (78°C) in a stirred state to obtain a monomer composition (a'2). Thereafter, the monomer composition (a'2) (monomer concentration: 43 mass%, rate of neutralization of acrylic acid: 73 mol%) was immediately poured into a stainless steel tray-type container (340 × 340 mm bottom, 25mm height, inner surface; Teflon (registered trademark) coating) in an atmosphere open system. The time from the second stage neutralization until the monomer composition (a'2) was poured into the tray-type container was set to 1 minute, and the tray-type container was heated using a hot plate (NEO HOTPLATE HI-1000/Iuchi Seieido Co., Ltd.) until the surface temperature reached 50°C. The time from when the temperature rise of the monomer composition was observed (from the polymerization initiation) until the maximum temperature (higher than 100°C) was reached was 1 minute.

In the above description, the monomer is composed of acrylic acid and sodium acrylate generated by neutralization of acrylic acid and sodium hydroxide, and the sum of these contents is the content of the monomer also in the calculation of the monomer concentration.

The hydrogel (a3) (about 65°C) obtained by the polymerization reaction (monomer concentration: 43 mass%, monomer temperature at the time of the start of polymerization: 78°C, polymerization time: 1 minute → high concentration/high temperature initiation/short-time polymerization) was gel-crushed using a meat chopper (manufactured by REMACOM, model: HL-G22SN) equipped with a 9.5-mm hole diameter of the die plate immediately after polymerization (within 5 minutes after being taken out of the polymerizer) to obtain a particulate hydrogel (b1) . The input amount of the hydrogel (a3) to the meat chopper was set to 375 g/min, and in parallel with the input of the hydrogel (a3), gel-crushing was performed while deionized water at 25°C was charged into the meat chopper at 50 g/min to obtain a particulate hydrogel (b1). The obtained particulate hydrogel (b1) had a mass average particle size in terms of solid content (hereinafter, simply referred to as the gel particle size) of 600 um, a CRC of 34.2 g/g, and a hydrogen peroxide amount of 70 ppm (residual ratio of hydrogen peroxide added in the polymerization step: 70%). The gel solid content ratio of the obtained particulate hydrogel (b1) was 46.0 mass%.

The gel-crushed particulate hydrogel (b1) (about 60°C) was spread on a 50-mesh wire mesh and subjected to static hot gas drying at 190°C for 30 minutes. A continuous operation was performed for 30 minutes or less from the end of polymerization to the start of drying including gel-crushing. When a K-line sheathed thermocouple (manufactured by ASAHI SANGYO CO.,LTD., TS4-K16CS-U-300-WXA3000) was placed at the central portion of the material layer (the particulate hydrogel or the granular dried product) and measurement was performed, the maximum reaching temperature (hereinafter, the maximum reaching temperature of the crosslinked hydrogel polymer is also simply referred to as the drying temperature) was 190°C.

The dried product was pulverized using a roll mill (WML type roll pulverizer /manufactured by Inokuchi Giken Co., Ltd.) and further sieved with JIS sieves having a mesh opening of 850 um and 150 $\mu$m, and particles not passing through the 850 um sieve and particles passing through the 150 um sieve were removed, an irregularly shaped pulverized water-absorbing resin (c1) was obtained.

The solids content of the resin of the obtained water-absorbing resin (c1) was 96.0 mass%. The particle size distribution of the water-absorbing resin (c1) was such that particles passing through 850 um but not passing through 600 um was 3 mass%, particles passing through 600 um but not passing through 500 um was 10 mass%, particles passing through 500 um but not passing through 300 um was 54 mass%, particles passing through 300 um but not passing through 150 um was 31 mass%, and particles passing through 150 um but not passing through 45 um was 2 mass%, the mass average particle size D50 was 346 $\mu$m, $\sigma\zeta$ was 0.355, the CRC was 56.3 g/g (CRC increase extent from the hydrogel before drying = +22.1 g/g), and hydrogen peroxide was not detected.

[Example 2] Change in hydrogen peroxide amount (100 ppm → 200 ppm)

The same operation as in Example 1 was performed except that the amount of the aqueous hydrogen peroxide solution and the amount of the deionized water, which were used in the preparation of the monomer composition in Example 1, were changed to 2.1 g (200 ppm of hydrogen peroxide with respect to the solid content (monomer) in the monomer composition) and 393.6 g, respectively, and a particulate hydrogel (b2) was obtained by polymerization of the monomer composition having a monomer concentration of 43 mass%/rate of neutralization of acrylic acid of 73 mol%.

The obtained particulate hydrogel (b2) had a gel particle size of 620 um, a CRC of 33.5 g/g, a gel solid content ratio of 46.8 mass%, and a hydrogen peroxide amount of 165 ppm. After drying at a drying temperature of 190°C, the mass average particle size and the distribution thereof were adjusted in the same manner as in Example 1, the CRC of the obtained water-absorbing resin (c2) was 60.1 g/g (CRC increase extent from the hydrogel before drying = +26.6 g/g), the solid content was 96.5 mass%, and hydrogen peroxide was not detected.

[Example 3] Change in crosslinking agent amount and hydrogen peroxide amount (PEGDA 0.039 → 0.075 mol%, hydrogen peroxide 100 ppm → 800 ppm)

The same operation as in Example 1 was performed except that the amount of deionized water, the amount of the aqueous polyethylene glycol diacrylate (PEGDA) solution, and the amount of the aqueous hydrogen peroxide solution, which were used in the preparation of the monomer composition in Example 1, were changed to 376.4 g, 23.0 g (PEGDA = 0.075 mol% with respect to the monomer), and 8.3 g (800 ppm of hydrogen peroxide with respect to the solid content (monomer) in the monomer composition), respectively, and a particulate hydrogel (b3) was obtained by polymerization of the monomer composition having a monomer concentration of 43 mass%/rate of neutralization of 73 mol%.

The obtained particulate hydrogel (b3) (PEGDA = 0.075 mol%) had a gel particle size of 540 um, a CRC of 30.0 g/g, a gel solid content ratio of 47.0 mass%, and a hydrogen peroxide amount of 680 ppm. After drying at a drying temperature of 190°C, the dried product was sieved in the same manner as in Example 1, and the mass average particle size and the distribution of the particle size were adjusted by removing particles not passing through a sieve of 850 um and particles (c3') passing through a sieve of 150 um. The CRC of the obtained water-absorbing resin (c3) was 47.7 g/g (CRC increase extent from the hydrogel before drying = +17.7 g/g), the solid content was 96.8 mass%, and hydrogen peroxide was not detected.

[Example 4] Change in crosslinking agent amount and hydrogen peroxide amount (PEGDA 0.039 → 0.12 mol%, hydrogen peroxide 100 ppm → 2000 ppm)

The same operation as in Example 1 was performed except that the amount of deionized water, the amount of the aqueous polyethylene glycol diacrylate solution, and the amount of the aqueous hydrogen peroxide solution, which were used in the preparation of the monomer composition in Example 1, were changed to 350.22 g, 36.8 g (0.12 mol% with respect to the monomer), and 20.6 g (2000 ppm of hydrogen peroxide with respect to the solid content (monomer) in the monomer composition), respectively, and a particulate hydrogel (b4) was obtained by polymerization of the monomer composition having a monomer concentration of 43 mass%/rate of neutralization of acrylic acid of 73 mol%.

The obtained particulate hydrogel (b4) (PEGDA = 0.12 mol%) had a gel particle size of 500 um, a CRC of 27.8 g/g, a gel solid content ratio of 48.0 mass%, and a hydrogen peroxide amount of 1750 ppm. After drying at a drying temperature of 190°C, the mass average particle size and the distribution of the particle size were adjusted in the same manner as in Example 1, the CRC of the obtained water-absorbing resin (c4) was 49.0 g/g (CRC increase extent from the hydrogel before drying = +21.2 g/g), the solid content was 97.2 mass%, and hydrogen peroxide was not detected.

[Example 5] Change in type and amount of crosslinking agent (PEGDA = 0.039 mol% → TMPTA = 0.026 mol%)

The same operation as in Example 1 was performed except that the amount of acrylic acid, the 10 mass% aqueous polyethylene glycol diacrylate solution, and the amount of the deionized water, which were used in the preparation of the monomer composition in Example 1, were changed to 417.9 g, 4.5 g (TMPTA 0.026 mol% with respect to the monomer) of the 10 mass% trimethylolpropane triacrylate (TMPTA) acrylic acid solution, and 406.1 g, respectively, and a particulate hydrogel (b5) was obtained by polymerization of the monomer composition having a monomer concentration of 43 mass%/rate of neutralization of acrylic acid of 73 mol%.

The obtained particulate hydrogel (b5) (TMPTA = 0.026 mol%) had a gel particle size of 610 um, a CRC of 36.5 g/g, a gel solid content ratio of 46.9 mass%, and a hydrogen peroxide amount of 80 ppm. After drying at a drying temperature of 190°C, the mass average particle size and the distribution of the particle size were adjusted in the same manner as in Example 1, the CRC of the obtained water-absorbing resin (c5) was 46.5 g/g (CRC increase extent from the hydrogel before drying = +10.0 g/g), the solid content was 96.4 mass%, and hydrogen peroxide was not detected.

[Example 6] Change in hydrogen peroxide amount (100 ppm → 200 ppm)

The same operation as in Example 5 was performed except that the amount of the aqueous hydrogen peroxide solution and the amount of the deionized water, which were used in the preparation of the monomer composition in Example 5, were changed to 2.1 g (200 ppm of hydrogen peroxide with respect to the solid content (monomer) in the monomer composition), 405.1 g, respectively, and a particulate hydrogel (b6) was obtained by polymerization of the monomer composition having a monomer concentration of 43 mass%/rate of neutralization of acrylic acid of 73 mol%.

The obtained particulate hydrogel (b6) had a gel particle size of 580 um, a CRC of 37.2 g/g, a gel solid content ratio of 48.2 mass%, and a hydrogen peroxide amount of 155 ppm. After drying at a drying temperature of 190°C, the mass average particle size and the distribution of the particle size were adjusted in the same manner as in Example 1, the CRC of the obtained water-absorbing resin (c6) was 53.0 g/g (CRC increase extent from the hydrogel before drying = +15.8 g/g), the solid content was 96.0 mass%, and hydrogen peroxide was not detected.

[Example 7] Change in hydrogen peroxide amount (800 ppm → 1000 ppm) and gel particle size (die hole diameter)

The same operation as in Example 3 was performed except that the amount of deionized water and the amount of the aqueous hydrogen peroxide solution, which were used in the preparation of the monomer composition in Example 3, were changed to 374.3 g and 10.3 g (1000 ppm of hydrogen peroxide with respect to the solid content (monomer) in the monomer composition), respectively, and the die hole diameter of the meat chopper was changed to 3.5 mm, and a particulate hydrogel (b7) was obtained by polymerization of the monomer composition having a monomer concentration of 43 mass%/rate of neutralization of acrylic acid of 73 mol%.

The obtained particulate hydrogel (b7) had a gel particle size of 200 um, a CRC of 31.0 g/g, a gel solid content ratio of 47 mass%, and a hydrogen peroxide amount of 840 ppm. After drying at a drying temperature of 190°C, the mass average particle size and the distribution of the particle size were adjusted in the same manner as in Example 1, the CRC of the obtained water-absorbing resin (c7) was 48.0 g/g (CRC increase extent from the hydrogel before drying = +17.0 g/g), the solid content was 97 mass%, and hydrogen peroxide was not detected.

[Example 8] Addition of hydrogen peroxide in gel-crushing step after polymerization step (first and third methods of present invention)

Into a polypropylene container having a capacity of 2 L, 422.0 g of acrylic acid, 11.94 g (0.039 mol% with respect to the monomer) of a 10 mass% aqueous polyethylene glycol diacrylate (PEGDA) solution (molecular weight: 523) as an internal crosslinking agent, 1.29 g (0.00096 mol% with respect to the monomer) of a 2.0 mass% aqueous trisodium diethylenetriaminepentaacetate (DTPA·3Na) solution, 173.9 g of a 48.5 mass% aqueous sodium hydroxide solution, and 395.7 g of deionized water (ion-exchanged water) were put and mixed to prepare a monomer composition (a4) .

Next, the monomer composition (a4) was cooled under stirring. When the liquid temperature reached 42°C, 178.7 g of a 48.5 mass% aqueous sodium hydroxide solution adjusted to a temperature of 40°C was added and mixed to prepare a monomer composition (a5). At this time, the temperature of the monomer composition (a5) was raised to 78.0°C by the heat of the second stage neutralization immediately after preparation. Immediately after the 48.5 mass% aqueous sodium hydroxide solution was started to be mixed, a precipitate was observed but the precipitate was gradually dissolved, and thus a transparent homogeneous solution (73 mol% neutralized aqueous sodium acrylate solution containing 0.039 mol% of PEGDA (about 78°C)) was obtained.

Next, 16.5 g of a 4.5 mass% aqueous sodium persulfate solution was added to the monomer composition (a5) in a stirred state, and then the mixture (monomer composition (a'5), monomer concentration: 43 mass%/rate of neutralization of acrylic acid: 73%) was immediately poured into a stainless steel tray-type container (340 × 340 mm bottom, 25mm height, inner surface; Teflon (registered trademark) coating) in an atmosphere open system. The time from the second stage neutralization until the monomer composition (a'5) was poured into the tray-type container was set to 1 minute, and the tray-type container was heated using a hot plate (NEO HOTPLATE HI-1000/Iuchi Seieido Co., Ltd.) until the surface temperature reached 50°C. The time from when the temperature rise of the monomer composition was observed until the maximum temperature was reached was 1 minute.

The hydrogel (a6) obtained by the polymerization reaction (monomer concentration: 43 mass%, monomer temperature at the time of the start of polymerization: 78°C, polymerization time: 1 minute → high concentration/high temperature initiation/short-time polymerization, not using hydrogen peroxide) was gel-crushed using a meat chopper (manufactured by REMACOM, model: HL-G22SN) equipped with a 9.5-mm hole diameter of the die plate to obtain a particulate hydrogel (b8).

The input amount of the hydrogel (a6) (solid content ratio: 53.0 mass%) to the meat chopper was set to 375 g/min, and simultaneous the input of the hydrogel (a6), gel-crushing was performed while a 0.08 mass% aqueous hydrogen peroxide solution at 25°C was charged into the meat chopper at 50 g/min (corresponding to 200 ppm of hydrogen peroxide with respect to the solid content of the hydrogel (a6)) to obtain a particulate hydrogel (b8). The obtained particulate hydrogel (b8) had a gel particle size of 600 um, a CRC of 34.0 g/g, a gel solid content ratio of 46.8 mass%, and a hydrogen peroxide amount of 180 ppm.

The gel-crushed hydrogel (b8) was spread on a 50-mesh wire mesh immediately after the gel-crushing (5 minutes or less) in the same manner as in Examples 1 to 7, and subjected to static hot gas drying at 190°C for 30 minutes. When the K-line sheathed thermocouple was placed at the central portion of the material layer and measurement was performed, the maximum reaching temperature (drying temperature) was 190°C. The dried product was pulverized using a roll mill in the same manner as in Examples 1 to 7 and further sieved with JIS sieves having a mesh opening of 850 um and 150 um to obtain an irregularly shaped pulverized water-absorbing resin (c8).

The solids content of the resin of the obtained water-absorbing resin (c8) was 96.3 mass%. The particle size distribution of the water-absorbing resin (c8) was such that particles passing through 850 um but not passing through 600 um was 3 mass%, particles passing through 600 um but not passing through 500 um was 10 mass%, particles passing through 500 um but not passing through 300 um was 54 mass%, particles passing through 300 um but not passing through 150 um was 31 mass%, and particles passing through 150 um but not passing through 45 um was 2 mass%, the mass average particle size D50 was 346 $\mu$m, $\sigma\zeta$ was 0.355, the CRC was 61.0 g/g (CRC increase extent from the hydrogel before drying = +27.0 g/g), and hydrogen peroxide was not detected.

[Example 9] Change in crosslinking agent amount and hydrogen peroxide amount (PEGDA 0.039 → 0.12 mol%, hydrogen peroxide 200 ppm → 2000 ppm)

The same operation as in Example 8 was performed except that the amount of the 10 mass% aqueous polyethylene glycol diacrylate (PEGDA) solution, and the amount of the deionized water (ion-exchanged water) were changed to 36.75 g (0.12 mol% with respect to the monomer) and 370.9 g, respectively, and the 0.08 mass% aqueous hydrogen peroxide solution was changed to a 0.8 mass% aqueous hydrogen peroxide solution (corresponding to 2000 ppm with respect to the solid content of the hydrogel (b9)), and a particulate hydrogel (b9) was obtained by polymerization of the monomer composition having a monomer concentration of 43 mass%/rate of neutralization of acrylic acid of 73 mol%.

The obtained particulate hydrogel (b9) (PEGDA = 0.12 mol%) had a gel particle size of 510 um, a CRC of 28.0 g/g, a gel solid content ratio of 47.1 mass%, and a hydrogen peroxide amount of 1820 ppm. After drying at a drying temperature of 190°C, the mass average particle size and the distribution of the particle size were adjusted in the same manner as in Examples 1 to 8, the CRC of the obtained water-absorbing resin (c9) was 49.3 g/g (CRC increase extent from the hydrogel before drying = +21.3 g/g), the solid content was 97.3 mass%, and hydrogen peroxide was not detected.

[Example 10] Change in type and amount of crosslinking agent (PEGDA = 0.039 → TMPTA = 0.026 mol%)

The same operation as in Example 8 was performed except that the amount of acrylic acid, the 10 mass% aqueous polyethylene glycol diacrylate (PEGDA) solution, and the amount of the deionized water (ion-exchanged water), which were used, were changed to 417.9 g, 4.5 g (0.026 mol% with respect to the monomer) of the 10 mass% trimethylolpropane triacrylate (TMPTA) acrylic acid solution, and 407.2 g, respectively, and a particulate hydrogel (b10) was obtained by polymerization of the monomer composition having a monomer concentration of 43 mass%/rate of neutralization of acrylic acid of 73 mol%.

The obtained particulate hydrogel (b10) had a gel particle size of 590 um, a CRC of 36.3 g/g, a gel solid content ratio of 47.2 mass%, and a hydrogen peroxide amount of 165 ppm. After drying at a drying temperature of 190°C, the mass average particle size and the distribution of the particle size were adjusted in the same manner as in Examples 1 to 9, the CRC of the obtained water-absorbing resin (c10) was 53.2 g/g (CRC increase extent from the hydrogel before drying = +16.9 g/g), the solid content was 96.2 mass%, and hydrogen peroxide was not detected.

[Example 11] Change in hydrogen peroxide amount (2000 ppm → 2500 ppm) and gel particle size (die hole diameter 9.5 → 3.5 mm)

A particulate hydrogel (b11) was obtained by performing the same operations as those of Example 9, except that the die hole diameter of the meat chopper was changed to 3.5 mm and the 0.8 mass% aqueous hydrogen peroxide solution was changed to a 1.0 mass% aqueous hydrogen peroxide solution (corresponding to 2500 ppm with respect to the solid content of the hydrogel (b11)).

The obtained particulate hydrogel (b11) had a gel particle size of 180 um, a CRC of 29.0 g/g, a gel solid content ratio of 47.5 mass%, and a hydrogen peroxide amount of 2300 ppm. After drying at a drying temperature of 190°C, the mass average particle size and the distribution of the particle size were adjusted in the same manner as in Example 1, the CRC of the obtained water-absorbing resin (c11) was 49.5 g/g (CRC increase extent from the hydrogel before drying = +20.5 g/g), the solid content was 97.6 mass%, and hydrogen peroxide was not detected.

[Example 12] Addition of hydrogen peroxide to fine powder granulated product

In a 5-L mortar mixer (manufactured by Nishinihonshikenki) kept warm in a water bath at 80°C, 300 g of particles (c3') (CRC = 42 g/g) passing through 150 um obtained by performing Example 3 a plurality of times was put, and 320 g of a 0.2% aqueous hydrogen peroxide solution at 80°C (obtained by mixing 318 g of deionized water at 80°C and 1.8 g of a 36% aqueous hydrogen peroxide solution, using the aqueous solution within 1 minute after mixing) was added at once while a stirring blade of the mortar mixer was rotated at a high speed of 60 Hz/100 V. The aqueous hydrogen peroxide solution was mixed with the fine powder water-absorbing resin (c3') within 10 seconds after charging to form a granulated product, and the granulated product was taken out after mixing for 1 minute to obtain a granulated gel (g1) (CRC = 42 g/g) having a particle size of 3 to 10 mm. The solid content ratio of the granulated gel (g1) was 47 mass%, and the hydrogen peroxide amount thereof was 2000 ppm.

Next, 1600 g of the particulate hydrogel (b3) obtained in Example 3 and 300 g of the granulated gel (g1) were mixed to obtain a hydrogel (b12). The mixing of the particulate hydrogel (b3) and the granulated gel (g1) was performed immediately after the gel-crushing and granulation (5 minutes or less). The hydrogel (b12) had a CRC of 31.9 g/g, a gel solid content ratio of 47.0 mass%, and a hydrogen peroxide amount of 890 ppm.

The obtained hydrogel (b12) was spread on a 50-mesh wire mesh immediately after the mixing (5 minutes or less) in the same manner as in Examples 1 to 11, and subjected to static hot gas drying at 190°C for 30 minutes. When the K-line sheathed thermocouple was placed at the central portion of the material layer and measurement was performed, the maximum reaching temperature (drying temperature) was 190°C. The dried product was pulverized using a roll mill in the same manner as in Examples 1 to 11 and further sieved with JIS sieves having a mesh opening of 850 um and 150 um to obtain an irregularly shaped pulverized water-absorbing resin (c12). The solids content of the resin of the obtained water-absorbing resin (c12) was 96.3 mass%. The particle size distribution of the water-absorbing resin (c12) was such that particles passing through 850 um but not passing through 600 um was 3 mass%, particles passing through 600 um but not passing through 500 um was 10 mass%, particles passing through 500 um but not passing through 300 um was 54 mass%, particles passing through 300 um but not passing through 150 um was 31 mass%, and particles passing through 150 um but not passing through 45 um was 2 mass%, the mass average particle size D50 was 346 $\mu$m, $\sigma\zeta$ was 0.355, the CRC was 49.0 g/g (CRC increase extent from the hydrogel before drying = +17.1 g/g), and hydrogen peroxide was not detected.

[Example 13]

Change of drying conditions (190°C, 30 minutes → 170°C, 40 minutes)

A particulate hydrogel (b13) and a water-absorbing resin (c13) were obtained by performing the same operations as those of Example 1, except that drying of the hydrogel was changed to drying at 170°C for 40 minutes. The particulate hydrogel (b13) obtained by polymerization of the monomer composition having a monomer concentration of 43 mass%/rate of neutralization of acrylic acid of 73 mol% had a gel particle size of 590 um, a CRC of 34.0 g/g, a gel solid content ratio of 46.0 mass%, and a hydrogen peroxide amount of 80 ppm. The particulate hydrogel (b13) was dried, and the maximum reaching temperature (drying temperature) of the material during drying was 170°C. The particle size of the dried product and the distribution of the particle size were adjusted in the same manner as in Example 1, the CRC of the obtained water-absorbing resin (c13) was 53.0 g/g (CRC increase extent from the hydrogel before drying = +19 g/g), the solid content was 96.0 mass%, and hydrogen peroxide was not detected.

[Example 14] Change of drying conditions (190°C, 30 minutes → 170°C, 40 minutes)

A particulate hydrogel (b14) and a water-absorbing resin (c14) were obtained by performing the same operations as Example 8, except that drying of the hydrogel was changed to drying at 170°C for 40 minutes. The particulate hydrogel (b14) obtained by polymerization of the monomer composition having a monomer concentration of 43 mass%/rate of neutralization of acrylic acid of 73 mol% had a gel particle size of 610 um, a CRC of 34.3 g/g, a gel solid content ratio of 46.5 mass%, and a hydrogen peroxide amount of 175 ppm. The particulate hydrogel (b14) was dried, and the maximum reaching temperature (drying temperature) of the material during drying was 170°C. The particle size of the dried product and the distribution of the particle size were adjusted in the same manner as in Example 1, the CRC of the obtained water-absorbing resin (c14) was 55.0 g/g (CRC increase extent from the hydrogel before drying = +20.7 g/g), the solid content was 96.2 mass%, and hydrogen peroxide was not detected.

[Comparative Example 1] No hydrogen peroxide, change of drying conditions (190°C, 30 minutes → 150°C, 50 minutes)

The same operation as in Example 1 was performed except that the aqueous hydrogen peroxide solution was not used in the polymerization step, the amount of deionized water used in the preparation of the monomer composition was changed to 395.7 g, and drying of the hydrogel was changed to drying at 150°C for 50 minutes, and a particulate hydrogel (d1) was obtained by polymerization of the monomer composition having a monomer concentration of 43 mass%/rate of neutralization of acrylic acid of 73 mol%.
The obtained particulate hydrogel (d1) had a gel particle size of 610 um, a CRC of 33.0 g/g, and a gel solid content ratio of 46.3 mass%. The gel was dried at a maximum reaching temperature (drying temperature) of 150°C, and the particle size of the dried product and the distribution of the particle size were adjusted in the same manner as in Example 1. The CRC of the obtained water-absorbing resin (e1) was 35 g/g (CRC increase extent from the hydrogel before drying = +2 g/g), and the solid content was 95.8 mass%.

[Comparative Example 2] Change of drying conditions (190°C, 30 minutes → 150°C, 50 minutes)

The same operation as in Example 1 was performed except that drying of the hydrogel was changed to drying at 150°C for 50 minutes, and a particulate hydrogel (d2) was obtained by polymerization of the monomer composition having a monomer concentration of 43 mass%/rate of neutralization of acrylic acid of 73 mol%. The obtained particulate hydrogel (d2) had a gel particle size of 600 um, a CRC of 33.0 g/g, a gel solid content ratio of 47.2 mass%, and a hydrogen peroxide amount of 70 ppm. The maximum reaching temperature (drying temperature) of the material during drying was 150°C. The particle size of the dried product and the distribution of the particle size were adjusted in the same manner as in Example 1, the CRC of the obtained water-absorbing resin (e2) was 36 g/g (CRC increase extent from the hydrogel before drying = +3.0 g/g), and the solid content was 95.5 mass%.

[Comparative Example 3] Change of drying conditions (190°C, 30 minutes → 150°C, 50 minutes)

A particulate hydrogel (d3) and a water-absorbing resin (e3) were obtained by performing the same operations as Example 8, except that drying of the hydrogel was changed to drying at 150°C for 50 minutes. The particulate hydrogel (d3) obtained by polymerization of the monomer composition having a monomer concentration of 43 mass%/rate of neutralization of acrylic acid of 73 mol% had a gel particle size of 600 um, a CRC of 33.0 g/g, a gel solid content ratio of 46.8 mass%, and a hydrogen peroxide amount of 160 ppm. The particulate hydrogel (d3) was dried, and the maximum reaching temperature (drying temperature) of the material during drying was 150°C. The particle size of the dried product and the distribution of the particle size were adjusted in the same manner as in Example 1, the CRC of the obtained water-absorbing resin (e3) was 35.5 g/g (CRC increase extent from the hydrogel before drying = +2.5 g/g), and the solid content was 96.0 mass%.

[Comparative Example 4] No hydrogen peroxide

The same operation as in Example 3 was performed except that the aqueous hydrogen peroxide solution was not used in the polymerization step and the amount of deionized water used in the preparation of the monomer composition was set to 384.6 g, and a particulate hydrogel (d4) was obtained by polymerization of the monomer composition having a monomer concentration of 43 mass%/rate of neutralization of acrylic acid of 73 mol%. The obtained particulate hydrogel (d4) had a gel particle size of 520 um, a CRC of 29.0 g/g, and a gel solid content ratio of 46.9 mass%. After drying at a drying temperature of 190°C, the particle size and the distribution of the particle size were adjusted in the same manner as in Example 1, the CRC of the obtained water-absorbing resin (e4) was 36.7 g/g (CRC increase extent from the hydrogel before drying = +7.7 g/g), and the solid content was 96.9 mass%.

[Comparative Example 5] No hydrogen peroxide

The same operation as in Example 4 was performed except that the aqueous hydrogen peroxide solution was not used in the polymerization step and the amount of deionized water used in the preparation of the monomer composition was set to 370.9 g, and a particulate hydrogel (d5) was obtained by polymerization of the monomer composition having a monomer concentration of 43 mass%/rate of neutralization of acrylic acid of 73 mol%. The obtained particulate hydrogel (d5) had a gel particle size of 490 um, a CRC of 27.5 g/g, and a gel solid content ratio of 48.2 mass%. After drying at a drying temperature of 190°C, the particle size and the distribution of the particle size were adjusted in the same manner as in Example 1, the CRC of the obtained water-absorbing resin (e5) was 31.0 g/g (CRC increase extent from the hydrogel before drying = +3.5 g/g), and the solid content was 97.6 mass%.

[Comparative Example 6] No hydrogen peroxide

The same operation as in Example 5 was performed except that the aqueous hydrogen peroxide solution was not used in the polymerization step and the amount of deionized water used in the preparation of the monomer composition was set to 407.2 g, and a particulate hydrogel (d6) was obtained by polymerization of the monomer composition having a monomer concentration of 43 mass%/rate of neutralization of acrylic acid of 73 mol%. The obtained particulate hydrogel (d6) had a gel particle size of 600 um, a CRC of 36.8 g/g, and a gel solid content ratio of 46.9 mass%. The particle size of the water-absorbing resin (e6) and the distribution of the particle size were adjusted in the same manner as in Example 1, the CRC was 41.5 g/g (CRC increase extent from the hydrogel before drying = +4.7 g/g), and the solid content was 96.7 mass%.

[Comparative Example 7] Adding persulfate instead of hydrogen peroxide in gel-crushing step

A particulate hydrogel (d7) and a water-absorbing resin (e7) were obtained by performing the same operations as Example 8, except that the 0.08 mass% aqueous hydrogen peroxide solution was changed to a 0.4 mass% aqueous sodium persulfate (NaPS) solution. The obtained particulate hydrogel (d7) had a gel particle size of 620 um, a CRC of 34.1 g/g, a gel solid content ratio of 47.0 mass%, and a sodium persulfate amount of 1000 ppm. After the drying the particulate hydrogel (d7), the particle size and the distribution of the particle size were adjusted in the same manner as in Example 1, the CRC of the obtained water-absorbing resin (e7) was 48.0 g/g (CRC increase extent from the hydrogel before drying = +13.9 g/g), and the solid content was 96.3 mass%.

[Comparative Example 8] No hydrogen peroxide

The same operation as in Example 1 was performed except that the amount of deionized water and the amount of an aqueous polyethylene glycol diacrylate (PEGDA) solution, which were used in the preparation of the monomer composition, were changed to 406.7 g and 0.92 g (PEGDA 0.003 mol% with respect to the monomer), respectively, and the aqueous hydrogen peroxide solution was not used. A hydrogel (d8) was obtained by polymerization of the monomer composition having a monomer concentration of 43 mass%/rate of neutralization of acrylic acid of 73 mol%. The hydrogel (d8) was performed under the same conditions as in the gel-crushing in Example 1, but the load in the meat chopper pulverizing was high unlike Example 1, and a particulate hydrogel could not be obtained.

(a) Absorption capacity without pressure (CRC) (NWSP 241.0.R2(15))

The absorption capacity without pressure (CRC) was measured in accordance with NWSP 241.0.R2(15). That is, 0.200 g (mass W0 (g)) of the water-absorbing resin was weighed and uniformly placed in a nonwoven fabric bag (60 × 85 mm), and then the nonwoven fabric bag was sealed by heat and immersed in 500 mL of a 0.90 mass% aqueous sodium chloride solution adjusted to a temperature of 23 ± 2°C. After a lapse of 30 minutes, the bag was pulled up, and drainage was performed under the condition of 250 G for 3 minutes using a centrifuge (centrifuge manufactured by KOKUSAN Co., Ltd.: type H-122). Thereafter, the mass (W1 (g)) of the bag was measured. The same operation was performed without adding water-absorbing resin, and the mass (W2 (g)) of the bag at that time was measured. The absorption capacity without pressure (CRC) was calculated from the obtained W0 (g), W1 (g), and W2 (g) according to the following (Formula 1).
[Mathematical Formula 1]

$$\texttt{CRC (g/g) = \{(W1 - W2)/W0\} - 1 ...(Formula 1)}$$

The CRC (gel CRC) of the hydrogel was performed in the same manner as described above except that 0.4 g of a crosslinked hydrogel polymer was used as a sample and the free swelling time was set to 24 hours. Separately, the solid content of the crosslinked hydrogel polymer was measured according to (d) described below, and the gel CRC was calculated according to the following Formula (2). The measurement was performed five times per sample, and the average value thereof was adopted.
[Mathematical Formula 2]

$$\texttt{Gel CRC (g/g) = \{(mwi - mb) - msi × (Wn/100)\}/\{msi × (Wn/100)\} ...(2)}$$

Where,

msi: mass (g) of crosslinked hydrogel polymer before measurement
mb: mass (g) of Blank (only nonwoven fabric) after free-swelling and draining
mwi: mass (g) of crosslinked hydrogel polymer after free-swelling and draining
Wn : solid content (mass%) of crosslinked hydrogel polymer.

(b) Particle size distribution, mass average particle size (D50), and logarithmic standard deviation ($\sigma\zeta$) of water-absorbing resin

The particle size of the particulate water-absorbing resin (PSD (Particle Size Distribution), the particle size distribution of the water-absorbing resin measured by sieve classification) and the logarithmic standard deviation ($\sigma\zeta$) of the particle size distribution were measured according to the measurement method disclosed in US 2006/204755 A.

(c) Solid content and moisture content

Into an aluminum cup (mass W8 (g)) having a bottom surface diameter of 50 mm, about 1 g of a water-absorbing resin (water-absorbing agent) was weighed (mass W9 (g)), and the aluminum cup was left to stand still for 3 hours in a windless dryer at 180°C and dried. The total mass (W10 (g)) of the aluminum cup and the water-absorbing resin (water-absorbing agent) after drying was measured, and the solid content was determined by the following (Formula 4). The moisture content is determined by the following (Formula 5). [Mathematical Formula 3]

$$\texttt{Solid content (mass\%) = \{(W10 - W8)/W9\} × 100 ...(Formula 4)}$$

[Mathematical Formula 4]

$$\texttt{Moisture content (mass\%) = 100 - solid content (mass\%) ...(Formula 5)}$$

(d) Solid content ratio (gel solid content) and moisture content of hydrogel

The moisture content of the hydrogel before drying was measured in the above (c) by using 2.0 g of the hydrogel and setting the drying time to 24 hours. Into an aluminum cup having a bottom surface diameter of 50 mm, 2.00 g of the water-absorbing resin (hydrogel) was put, and then the total mass of the sample (the water-absorbing resin and the aluminum cup) W1 (g) was accurately weighed. Next, the sample was allowed to stand in an oven set at an atmospheric temperature of 180°C. After a lapse of 24 hours, the sample was taken out from the oven, and the total mass W2 (g) was accurately weighed. When the mass of the water-absorbing resin (hydrogel) subjected to the measurement was represented by M (g), the moisture content of the water-absorbing resin (hydrogel), $(100-\alpha)$ (mass%) was determined in accordance with the following (Formula 6). $\alpha$ is the solid content ratio (mass%) of the water-absorbing resin (hydrogel).

$$(100 - \alpha) \ (mass\%) = \{(W1 - W2)/M\} \times 100 \ ...(Formula\ 6)$$

(e) Particle size of particulate hydrogel

Particle size (mass average particle size (D50) of particulate hydrogel

Measurement was performed by the following method.
Into 1000 g of a 20 mass% aqueous sodium chloride solution containing 0.08 mass% sodium polyoxyethylene lauryl sulfate (surfactant) (hereinafter, referred to as "aqueous sodium polyoxyethylene lauryl sulfate solution"), 20 g of the particulate hydrogel (solid content ratio: $\alpha$ mass%) having a temperature of 20 to 25°C was added to obtain a dispersion, and the dispersion was stirred with a stirrer chip having a length of 50 mm $\times$ a diameter of 7 mm at 300 rpm for 16 hours. The container used was a cylindrical polypropylene container (height: 21 cm, diameter: 8 cm, and internal volume: about 1.14 L).
After completion of the stirring, the dispersion was put into the central part of JIS standard sieves (diameter: 21 cm, mesh opening of sieves: 8 mm/4 mm/2 mm/1 mm/0.60 mm/0.30 mm/0.15 mm/0.075 mm) placed on a turntable. The entire hydrogel was washed out on the sieves using 100 g of an aqueous sodium polyoxyethylene lauryl sulfate solution from the cylindrical container, then 6000 g of an aqueous sodium polyoxyethylene lauryl sulfate solution was uniformly poured from above the sieves at a height of 30 cm using a shower (with 72 holes, flow rate: 6.0 [L/min]) while the sieves were manually rotated (at 20 rpm) so that the water-pouring range (50 cm$^2$) spread over the entire sieves. This operation was repeated four times to classify the hydrogel. The classified hydrogel on the first-stage sieve was drained for about 2 minutes and then weighed. The hydrogel was classified on the second and subsequent-stage sieves by the similar operation and drained, and then the hydrogel remaining on each sieve was weighed. The sieves were appropriately changed depending on the gel particle size. For example, when the hydrogel had a fine particle size and clogging occurred on the sieves with a mesh opening of 0.15 mm or 0.075 mm, classification was performed by replacing JIS standard sieves having a larger diameter (diameter: 30 cm, mesh opening: 0.15 mm and 0.075 mm).
The ratio (mass%) of the hydrogel remaining on each sieve was calculated from the mass of the hydrogel remaining on each sieve by the following (Formula 7). The mesh openings of the sieves after draining were calculated in accordance with the following (Formula 8), and the particle size distribution of the hydrogel was plotted on a logarithmic probability paper. The particle size at which %R on the cumulative sieve of the plot corresponded to 50 mass% was regarded as the mass average particle size (D50) of the hydrogel.

$$X \ (\%) = (w/W) \times 100 \ ...(Formula\ 7)$$

$$R(\alpha) \ (mm) = (20/W)1/3 \times r \ ...(Formula\ 8)$$

Where, in (Formula 7) and (Formula 8),
X; mass% (%) of the hydrogel remaining on each sieve after classification and draining
w; mass (g) of each hydrogel remaining on each sieve after classification and draining
W; total mass (g) of the hydrogel remaining on each sieve after classification and draining
R($\alpha$); mesh opening (mm) of the sieve converted to the hydrogel having a solid content ratio $\alpha$ (mass%)
r; mesh opening (mm) of the sieve through which the crosslinked hydrogel polymer (hydrogel particles) swollen in a 20 mass% aqueous sodium chloride solution is classified.

(f) Mass average particle size (d1) of hydrogel in terms of solid content

The mass average particle size in terms of solid content (mass average particle size of the hydrogel particles after drying) d1 was determined according to the following (Formula 9) from the following (f) solid content ratio ($\alpha$) of the hydrogel and (d) mass average particle size (D50) of the particulate hydrogel.

$$SolidD50 = GelD50 \times (\alpha/100)^{1/3} \ ...(Formula\ 9)$$

Where, in (Formula 9),

GelD50: mass average particle size (um) of the hydrogel particles
$\alpha$: solid content ratio (mass%) of the hydrogel particles
SolidD50: mass average particle size (um) in terms of the dried product of the hydrogel particles.

(g) Hydrogen peroxide amount with respect to solid content in (particulate) hydrogel

In a glass sample bottle with a screw cap (volume: 50 ml, diameter: 35 mm, height: about 80 mm), 2 g of a hydrogel, 12 g of a 0.9 mass% aqueous sodium chloride solution, 8 g of methanol (when the gel swells and stirring cannot be performed, the salt concentration or the amount of the aqueous solution or methanol is appropriately adjusted) were put, and stirred at 300 rpm at room temperature using a Teflon (registered trademark) -coated 25 mm stirrer with light shielding. After a lapse of 4 hours, the solution was taken out and allowed to pass through filter paper (No. 2, manufactured by ADVANTEC Corporation). In a glass sample bottle with a screw cap (volume: 20 ml, diameter: 25 mm, height: about 50 mm), 10.0 g of the solution was placed.

Thereafter, 0.30 g of a 2 N aqueous sulfuric acid solution and 0.1 g of a 30% titanium(IV) sulfate solution (manufactured by Wako Pure Chemical Industries, Ltd.) were immediately added, and the mixture was stirred at room temperature while being shielded from light. After a lapse of 1 minute, the solution was transferred to a 1 cm cell made of plastic, and an absorbance (measuring wavelength; 410 nm) was measured using a spectrophotometer (Hitachi Ratio Beam Spectrophotometer U-5100 type) (absorbance of a solution obtained by adding 0.30 g of a 2 N aqueous sulfuric acid solution and 0.1 g of a 30% titanium(IV) sulfate solution to 3 g of a 0.9 mass% aqueous sodium chloride solution, 2 g of methanol was taken as 0). The hydrogen peroxide amount (ppm) in the hydrogel was calculated from the absorbance thus obtained.

A calibration curve was prepared from absorbance obtained by preparing mixtures of 60 mass% of 0.9 mass% aqueous sodium chloride solutions each containing 0.0001 mass%, 0.0005 mass%, 0.0010 mass%, 0.0025 mass%, and 0.0050 mass% of hydrogen peroxide and 40 mass% of methanol and performing the above operation.

When the formula of the calibration curve is expressed as "Hydrogen peroxide amount (ppm) = a × (absorbance) (a is a constant)", the hydrogen peroxide amount (ppm) with respect to the solid content in the hydrogel is expressed by the following formula.

[Mathematical Formula 5]

$$\begin{aligned}
&(Hydrogen\ peroxide\ amount\ with\ respect\ to\ solid\ content\\
&in\ hydrogel)\ [ppm]\\
&= a \times absorbance \times 10/(10 + 0.4) \times \{20 + 2 \times (1 - gel\\
&solid\ content\ ratio/100)\}/(2 \times gel\ solid\ content\\
&ratio/100)\ ...(Formula\ 11)
\end{aligned}$$

(h) Sodium persulfate amount with respect to solid content in (particulate) hydrogel

In a lidded polypropylene container having a capacity of 260 ml, 3 g of a hydrogel and 100 g of a 5 wt% aqueous sodium chloride solution (when the gel swells and stirring cannot be performed, the salt concentration or the amount of the aqueous solution is appropriately adjusted) were put, and stirred at 500 rpm at room temperature using a Teflon (registered trademark) -coated 25 mm stirrer with light shielding. After a lapse of 2 hours, the solution was taken out and allowed to pass through a filter (GL chromatographic disk manufactured by GL Sciences Inc., water system 25 A, hole diameter: 0.45 $\mu$m). In a glass sample bottle with a screw cap (volume: 50 ml, diameter: 35 mm, height: about 80 mm), 5.00 g of the solution was placed. Thereafter, 0.50 g of a 44 wt% aqueous potassium iodide solution was immediately added, and the mixture was stirred at room temperature while being shielded from light. After a lapse of 1 hour, the solution was transferred to a 1 cm cell made of plastic, and an absorbance (measuring wavelength; 350 nm) was measured using a spectrophotometer (Hitachi Ratio Beam Spectrophotometer U-1100 type) (absorbance of a solution obtained by adding 0.50 g of a 44 wt% aqueous potassium iodide solution to 5 g of a 5 wt% mass% aqueous sodium chloride solution was taken as 0). The sodium persulfate amount (ppm) in the hydrogel was calculated from the absorbance thus obtained.

A calibration curve was prepared from absorbance obtained by preparing mixtures of 5 wt% aqueous sodium chloride solutions each containing 0.0005 wt%, 0.0010 wt%, 0.0015 wt%, and 0.0020 wt% of sodium persulfate and performing the above operation.

When the formula of the calibration curve is expressed as "Sodium persulfate amount (ppm) = a × (absorbance) (a is a constant)", the sodium persulfate amount (ppm) with respect to the solid content in the hydrogel is expressed by the following formula.

[Mathematical Formula 6]

```
(Sodium persulfate amount with respect to solid content
in hydrogel) [ppm] = {a × (absorbance)} × (5 + 0.5)/5 ×
(100 + 3)/{3 × (gel solid content ratio)/100} ...(Formula
12)
```

Physical properties and results of Examples and Comparative Examples are shown in Table 1 and Fig. 1.

[Table 1-1]

| | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Polymerization | Monomer concentration | mass % | 43 | ← | ← | ← | ← | ← | ← | 43 | ← | ← | ← | ← | ← | ← |
| | Rate of neutralization of acrylic acid | mol% | 73 | ← | ← | ← | ← | ← | ← | 73 | ← | ← | ← | ← | ← | ← |
| | Crosslinking agent type | | PEGDA | ← | ← | ← | TMPTA | ← | PEGDA | PEGDA | ← | TMPTA | PEGDA | PEGDA | ← | ← |
| | Crosslinking agent amount | mol% | 0.039 | ← | 0.075 | 0.12 | 0.026 | ← | 0.075 | 0.039 | 0.12 | 0.026 | 0.12 | 0.039 | ← | ← |
| $H_2O_2$ addition | Addition method | | Addition during polymerization | ← | ← | ← | ← | ← | ← | Addition during gelpulverizing | ← | ← | ← | Addition during polymerization + addition during fine powder granulating | Addition during polymerization | Addition during gelpulverizing |
| | Amount to add | ppm *1 | 100 | 200 | 800 | 2000 | 100 | 200 | 1000 | 200 | 2000 | 200 | 2500 | 1010 | 100 | 200 |
| | Amount to add | mol% *2 | 0.026 | 0.052 | 0.21 | 0.52 | 0.026 | 0.052 | 0.26 | 0.052 | 0.52 | 0.052 | 0.65 | 0.26 | 0.026 | 0.052 |
| Pulverized gel physical properties | Gel particle size | μm | 600 | 620 | 540 | 500 | 610 | 580 | 200 | 600 | 510 | 590 | 180 | 550 | 590 | 610 |
| | Gel CRC | g/g | 34.2 | 33.5 | 30 | 27.8 | 36.5 | 37.2 | 31 | 34 | 28 | 36.3 | 29 | 31.9 | 34 | 34.3 |
| | Gel solid content | mass % | 46 | 46.8 | 47 | 48 | 46.9 | 48.2 | 47 | 46.8 | 47.1 | 47.2 | 47.5 | 47 | 46 | 46.5 |
| | $H_2O_2$ content | ppm | 70 | 165 | 680 | 1750 | 80 | 155 | 840 | 180 | 1820 | 165 | 2300 | 890 | 80 | 175 |

EP 4 286 421 A1

34

| | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Drying | Hot gas temperature | °C | 190 | ← | ← | ← | ← | ← | ← | 190 | ← | ← | ← | ← | 170 | ← |
| | Maximum reaching temperature of material | °C | 190 | ← | ← | ← | ← | ← | ← | 190 | ← | ← | ← | ← | 170 | ← |
| | Drying time | min | 30 | ← | ← | ← | ← | ← | ← | 30 | ← | ← | ← | ← | 40 | ← |
| Dried product | CRC | g/g | 56.3 | 60.1 | 47.7 | 49 | 46.5 | 53 | 48 | 61 | 49.3 | 53.2 | 49.5 | 49 | 53 | 55 |
| | Solid content | mass % | 96 | 96.5 | 96.8 | 97.2 | 96.4 | 96 | 97 | 96.3 | 97.3 | 96.2 | 97.6 | 96.3 | 96 | 96.2 |
| | CRC increase amount*3 ($\Delta$CRC) | g/g | 22.1 | 26.6 | 17.7 | 21.2 | 10 | 15.8 | 17 | 27 | 21.3 | 16.9 | 20.5 | 17.1 | 17 | 20.7 |

*1 With respect to the solid content concentration
*2 With respect to the monomer
*3 Dried product CRC-gel CRC

EP 4 286 421 A1

[Table 1-2]

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Polymerization | Monomer concentration | mass% | 43 | ← | ← | ← | ← | ← | ← | ← |
| | Rate of neutralization of acrylic acid | mol% | 73 | ← | ← | ← | ← | ← | ← | ← |
| | Crosslinking agent type | | PEGDA | ← | PEGDA | ← | ← | TMPTA | PEGDA | ← |
| | Crosslinking agent amount | mol% | 0.039 | 0.039 | 0.039 | 0.075 | 0.12 | 0.026 | 0.039 | 0.003 |
| $H_2O_2$ addition | Addition method | | - | Addition during polymerization | Addition during gel-pulverizing | - | - | - | Addition during gel-pulverizing | - |
| | Amount to add | ppm*1 | 0 (not added) | 100 | 200 | 0 (not added) | ← | 0 (not added) | 1000 (NaPS) | 0 (not added) |
| | Amount to add | mol%*2 | 0 | 0.026 | 0.052 | 0 | ← | ← | 0.04 | 0 |
| Pulverized gel physical properties | Gel particle size | μm | 610 | 600 | 600 | 520 | 490 | 600 | 620 | Crushing not possible |
| | Gel CRC | g/g | 33 | 33 | 33 | 29 | 27.5 | 36.8 | 34.1 | |
| | Gel solid content | mass% | 46.3 | 47.2 | 46.8 | 46.9 | 48.2 | 46.9 | 47 | |
| | $H_2O_2$ content | ppm | - | 70 | 160 | - | - | - | - | |
| Drying | Hot gas temperature | °C | 150 | ← | ← | 190 | ← | ← | ← | |
| | Maximum reaching temperature of material | °C | 150 | ← | ← | 190 | ← | ← | ← | |
| | Drying time | min | 50 | ← | 30 | 30 | ← | ← | ← | |

(continued)

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Dried product | CRC | g/g | 35 | 36 | 35.5 | 36.7 | 31 | 41.5 | 48 | |
| | Solid content | mass% | 95.8 | 95.5 | 96 | 96.9 | 97.6 | 96.7 | 96.3 | |
| | CRC increase amount*3 (ΔCRC) | g/g | 2 | 3 | 2.5 | 7.7 | 3.5 | 4.7 | 13.9 | |

*1 With respect to the solid content concentration
*2 With respect to the monomer
*3 Dried product CRC-gel CRC

The current value (A) of the meat chopper (gel-crushing device) at the time of gel-crushing was almost equivalent current values A by comparison among Examples 1, 2, and 8 (PEGDA = 0.0039 mol%) and Comparative Examples 1, 2, 3, and 7 (PEGDA = 0.0039 mol%), and also by comparison among Examples 5, 6, and 10 and Comparative Example 6 (TMPTA = 0.026 mol%) , which the crosslinking agent types (PEGDA or TMPTA) and the amount used were same and the load at the time of gel-crushing was almost equivalent in the same comparison as above. In the gel-crushing device, since the voltage (V) is constant, the current value (A) of the crushing device is proportional to the power consumption (W), and it can be said that the current value (A) substantially indicates the energy consumption amount.

Therefore, even when the load on the device at the time of gel-crushing is equivalent and production efficiency is equivalent, a water-absorbing resin having a higher CRC is obtained in Examples 1, 2, and 8 in which hydrogen peroxide is added in an amount of 100 ppm or more and the hydrogel is dried at a temperature exceeding 160°C as compared with products obtained in Comparative Examples 1, 2, and 3, and it is understood that a water-absorbing resin having excellent absorption performance (CRC) is obtained by the method of the present invention as in Example 1 (CRC = 56.3 g/g), Example 2 (CRC = 60.1 g/g), and Example 8 (CRC = 61 g/g) as compared with Comparative Example 1 (CRC = 35 g/g after drying).

Comparing Comparative Example 7 (PEGDA = 0.039 mol%, no hydrogen peroxide) and Example 3 (PEGDA = 0.075 mol%, 680 ppm of hydrogen peroxide in the hydrogel before drying) in which the water-absorbing resin having almost same CRC (about 48 to 49 g/g) was obtained, the current value A at the time of gel-crushing using the meat chopper in Example 3 was lower than that in Comparative Example 7 (no hydrogen peroxide) even though the water-absorbing resin having almost same fluid retention capacity (CRC) were obtained in these production methods. From these comparisons, it was shown that even when a water-absorbing resin exhibiting equivalent water absorption performance is produced, it is possible to reduce the load on a production apparatus and the consumed energy. Also in Examples 4, 9, and 11, the current value A (substantial power consumption W because the voltage is constant) at the time of gel-crushing using the meat chopper was lower than in Comparative Examples 1 and 7 (no hydrogen peroxide) though the water-absorbing resin obtained in these Examples had almost same fluid retention capacity (CRC) .

In the drying of the hydrogel containing the same hydrogen peroxide amount, "comparison between Comparative Example 2 (CRC = 36 g/g in drying at 150°C) and Example 1 (CRC = 56.3/g in drying at 190°C) (70 ppm of hydrogen peroxide in the hydrogel)" and "comparison between Comparative Example 3 (CRC = 35.5 g/g in drying at 150°C) and Example 8 (CRC= 61 g/g in drying at 190°C) (about 160 ppm of hydrogen peroxide in the hydrogel)" indicate that a high fluid retention capacity of the water absorbing resin (40 g/g or more, or even 50 g/g or more in CRC before surface crosslinking after drying) by 100 ppm of hydrogen peroxide in the hydrogel and heating exceeding 160°C. In the present invention, conventionally, a water-absorbing resin having a high fluid retention capacity (40 g/g or more, or even 50 g/g or more in CRC before surface crosslinking after drying) can be stably produced by the method not disclosed in Patent Literatures 1 to 4, even in the case of a water-absorbing resin having a high fluid retention capacity, which has been difficult to stably continuously produce due to the adhesiveness of the crosslinked hydrogel polymer.

Comparison of Examples 1 and 2 (PEGDA) with Examples 3 and 4 (TMPTA) in which the type of the internal crosslinking agent was changed shows that the present invention can be widely applied regardless of the crosslinking agent, but it is found that PEGDA having a polyethylene glycol structure is more likely to obtain a water-absorbing resin having a higher fluid retention capacity than TMPTA.

Also from Fig. 1, it is found that a water-absorbing resin having a higher fluid retention capacity (g/g) is obtained even with the same crosslinking agent amount (mol%).

It is also found from Table 1 that in the second production method of the present invention (high-temperature initiated short-time polymerization (100 to 2000 ppm of hydrogen peroxide at polymerization initiation of 78°C for polymerization time of 1 minute in Examples 1 to 7)/and the third production method of the present invention (addition of hydrogen peroxide in the gel-crushing step after polymerization (100 to 2000 ppm of hydrogen peroxide in Examples 8 to 11), 70 to 92 mass% of 100 to 2000 ppm of the added hydrogen peroxide is contained in the hydrogel polymer to be provided in the drying step, and a crosslinked hydrogel polymer containing 50 ppm or more of hydrogen peroxide required for the first production method of the present invention is obtained by the second and third production methods of the present invention.

From the above, such as Table 1 (Examples 1 to 14, Comparative Examples 1 to 8) and Fig. 1, it is understood that handleability of the hydrogel is improved by containing 50 ppm or more of hydrogen peroxide in the hydrogel and heating exceeding 160°C and thus a water-absorbing resin having a high fluid retention capacity is provided.

The superiority of the first to third production methods of the present invention is clear. Hydrogen peroxide is known as an example of a polymerization initiator of a water-absorbing resin, but the above Patent Literatures 1 to 14 do not suggest the production method of the present application by 50 ppm or more of hydrogen peroxide in the hydrogel and heating exceeding 160°C and the effect of the present application at all.

The present application is based on Japanese Patent Application No. 2021-013220 filed on January 29, 2021, the disclosure content of which is incorporated herein by reference in its entirety.

**Claims**

1. A method for producing a water-absorbing resin, the method comprising:

   a polymerization step of polymerizing a monomer composition containing an internal crosslinking agent and a monomer to obtain a crosslinked hydrogel polymer; and
   a drying step of drying the crosslinked hydrogel polymer to obtain a dry polymer,
   wherein the crosslinked hydrogel polymer to be subjected to the drying step contains 50 ppm or more of hydrogen peroxide with respect to a solid content mass of the crosslinked hydrogel polymer, and
   the crosslinked hydrogel polymer is heated during the drying step so that a maximum reaching temperature of the crosslinked hydrogel polymer exceeds 160°C, and/or the dry polymer is heated after the drying step so that a maximum reaching temperature of the dry polymer exceeds 160°C.

2. The method according to claim 1, comprising a gel-crushing step of pulverizing the crosslinked hydrogel polymer obtained in the polymerization step,
   wherein the crosslinked hydrogel polymer to be subjected to the drying step is a crosslinked particulate hydrogel polymer crushed in the gel-crushing step.

3. The method according to claim 2, wherein in the gel-crushing step, 50 ppm or more of hydrogen peroxide is added to the solid content mass of the crosslinked hydrogel polymer.

4. The method according to any one of claims 1 to 3, wherein in the polymerization step, a crosslinked hydrogel polymer is obtained by polymerizing a monomer composition containing 50 ppm or more of hydrogen peroxide with respect to a solid content.

5. The method according to any one of claims 1 to 4, wherein in the polymerization step, a monomer concentration of the monomer composition is 30 mass% or more, a temperature of the monomer composition at start of polymerization is 30°C or higher, and a polymerization time from start of polymerization until a polymerization temperature reaches a maximum temperature is 30 minutes or shorter.

6. The method according to any one of claims 2 to 5, wherein a mass average particle size of the crosslinked particulate hydrogel polymer in terms of solid content is 1000 um or less.

7. The method according to any one of claims 1 to 6, wherein in the polymerization step, the monomer contains an acid group-containing unsaturated monomer as a main component, and
   the number of moles of a neutralized salt is 50 mol% or more with respect to a total number of moles of the acid group-containing unsaturated monomer and its neutralized salt.

8. The method according to any one of claims 1 to 7, wherein in the polymerization step, an amount of the internal crosslinking agent used is 0.005 mol% or more with respect to a total amount of the monomer.

9. The method according to any one of claims 1 to 8, wherein in the polymerization step, a monomer concentration of the monomer composition is 30 to 70 mass%, a temperature of the monomer composition at start of polymerization is 40°C or higher, and a polymerization time from start of polymerization until a polymerization temperature reaches a maximum temperature is 5 minutes or shorter.

10. The method according to any one of claims 1 to 9, wherein the crosslinked hydrogel polymer is dried with a dryer heated to a temperature exceeding 160°C.

11. The method according to any one of claims 1 to 10, wherein an absorption capacity (CRC) of the water-absorbing resin after the drying step is 40 g/g or more.

12. The method according to any one of claims 1 to 11, wherein the crosslinked hydrogel polymer during the drying step and/or the dry polymer after the drying step is further surface-crosslinked.

13. The method according to any one of claims 1 to 12, wherein the internal crosslinking agent has a polyethylene glycol structure.

FIG. 1

## INTERNATIONAL SEARCH REPORT

| International application No. |
| --- |
| **PCT/JP2022/003551** |

**A. CLASSIFICATION OF SUBJECT MATTER**

*C08F 6/26*(2006.01)i; *C08J 3/12*(2006.01)i; *C08F 220/04*(2006.01)i; *C08F 220/20*(2006.01)i
FI:    C08J3/12 A; C08F220/04; C08F220/20; C08F6/26

According to International Patent Classification (IPC) or to both national classification and IPC

**B. FIELDS SEARCHED**

Minimum documentation searched (classification system followed by classification symbols)
C08F6/26; C08J3/12; C08F220/04; C08F220/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2006-199805 A (ASAHI KASEI CHEMICALS CORP.) 03 August 2006 (2006-08-03) claims, paragraphs [0037]-[0058], [0082], examples | 1-2, 4-11, 13 |
| Y | | 3, 9, 12 |
| X | JP 8-510484 A (THE DOW CHEMICAL CO.) 05 November 1996 (1996-11-05) claims, page 14, line 6 to page 23, line 4, examples | 1-2, 4-8, 10-13 |
| Y | | 3, 9, 12 |
| X | JP 2006-299234 A (NIPPON SHOKUBAI CO., LTD.) 02 November 2006 (2006-11-02) claims, paragraphs [0018]-[0021], [0030]-[0036], examples | 1-3, 5-13 |
| Y | | 3, 12 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 March 2022** | **19 April 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT

Information on patent family members

International application No.

**PCT/JP2022/003551**

| Patent document cited in search report | | | Publication date (day/month/year) | Patent family member(s) | Publication date (day/month/year) |
|---|---|---|---|---|---|
| JP | 2006-199805 | A | 03 August 2006 | (Family: none) | |
| JP | 8-510484 | A | 05 November 1996 | US 5629377 A claims, column 5, line 58 to column 11, line 58, examples | |
| JP | 2006-299234 | A | 02 November 2006 | US 2006/0183828 A1 claims, paragraphs [0026]-[0032], [0049]-[0064], examples | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006062609 A
- JP H11188726 A
- JP S5734101 A
- JP 2001342258 A
- JP S60055002 A
- JP S62156102 A
- JP H02049002 A
- JP H03041104 A
- JP H04372603 A
- JP S601205 A
- WO 2003059962 A
- WO 2008009611 A
- JP H11181005 A
- JP H03174414 A
- WO 2020089013 A
- CN 101045789 A
- US 7265190 B
- JP 4969778 B
- US 6906159 B

- US 5275773 A
- US 6100305 A
- US 6140395 A
- US 6875511 B
- US 2004234607 A
- US 200546069 A
- WO 2011126079 A
- US 2013026412 A
- WO 2018092863 A
- WO 2018092864 A
- WO 2006100300 A
- WO 2011025012 A
- WO 2011025013 A
- WO 2011111657 A
- US 7638570 B
- WO 2014038324 A
- US 7183456 B
- US 2006204755 A
- JP 2021013220 A

### Non-patent literature cited in the description

- *Modern Superabsorbent Polymer Technology,* 1998, 69-117

- *Non-Woven Standard Procedures,* 2015